# EUROPÄISCHE PATENTSCHRIFT

(11) **EP 3 712 052 B1**
(45) Veröffentlichungstag und Bekanntmachung des Hinweises auf die Patenterteilung: **08.04.2026**
(21) Anmeldenummer: 20000060.2
(22) Anmeldetag: 10.02.2020
(51) Int. Cl.: B62M 9/121, B62M 9/124, B62M 9/125

(54) **KOAXIALE SCHALTWERKSANBINDUNG**
COAXIAL SHIFTER CONNECTION
RACCORDEMENT COAXIAL DE MONTE-ET-BAISSE

(30) Priorität: 22.03.2019 DE 102019002042; 31.01.2020 DE 102020201229
(43) Veröffentlichungstag der Anmeldung: 23.09.2020
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- EP-A2- 1 415 901
- EP-A2- 3 388 324
- DE-U1- 9 015 408
- US-A1- 2009 163 310
- US-A1- 2014 018 199
- US-A1- 2019 016 411

## Beschreibung

### Technischer Hintergrund

Ein Fahrrad kann mit einer Antriebsanordnung, wie z.B. einem Kettenantrieb, ausgestattet sein. Fahrrad-Antriebsanordnungen können verwendet werden, um das Drehmoment von einem Fahrer auf ein hinteres Laufrad zu übertragen, um das Fahrrad anzutreiben. Eine Antriebsanordnung kann zum Beispiel das Drehmoment von einer vorderen Kettenradanordnung über eine Kette auf ein hinteres Kettenrad oder Ritzel, etwa ein Ritzel einer sog. Ritzelkassette oder eines sog. Ritzelpakets, übertragen, um ein hinteres Laufrad anzutreiben. Eine solche Antriebsanordnung kann als Antriebsstrang bezeichnet werden.

Kettenradbaugruppen für Fahrräder können ein oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Kassette, Ritzelkassette oder Ritzelpaket bezeichnet werden. Eine solche Kassette ist typischerweise so konfiguriert, dass sie an einem Freilaufteil eines hinteren Laufrades befestigt werden kann. Eine Kassette kann z.B. an einem Freilaufkörper eines Hinterrades mit Hilfe einer Keil- und/oder Gewindeverbindung befestigt werden.

Die Ausrichtung einer vorderen Kettenblattgruppe mit einer hinteren Ritzelkassette beeinflusst die Leistung der Kette. Zum Beispiel kann eine vordere Kettenblattbaugruppe ein einziges Kettenblatt aufweisen, welches nach einem bestimmten Ritzel der hinteren Ritzelkassette ausgerichtet ist. Wenn die Kette das einzelne Kettenblatt mit diesem im Wesentlichen ausgerichteten einzelnen hinteren Ritzel verbindet, steht die Kette unter geringer oder keiner seitlichen Belastung. Wenn die Kette jedoch seitlich zu einem anderen Ritzel der Kassette bewegt wird, z.B. durch einen hinteren Umwerfer oder ein hinteres Schaltwerk einer Kettenschaltung des Antriebsstrangs, erfährt die Kette eine gewisse seitliche Belastung. Entsprechende seitliche Belastungen der Kette treten auf, wenn die vordere Kettenblattbaugruppe mehrere Kettenblätter aufweist, zwischen denen die Kette durch einen vorderen Umwerfer oder ein vorderes Schaltwerk der Kettenschaltung bewegt wird.

Für eine gute Leistung einer solchen Kettenschaltung ist auch eine richtige Positionierung und Ausrichtung speziell des hinteren Schaltwerks am Rahmen des Fahrrads von großer Bedeutung. Es wurde erkannt, dass koaxiale Ausrichtungsmerkmale bei der Antriebsanordnung angewendet werden können. Beispielsweise kann eine einzelne Komponente als Referenz für die Ausrichtung verschiedener anderer Komponenten der Antriebsanordnung dienen. Beispielsweise können sowohl ein Schaltwerk als auch eine Kassette koaxial zu einer Achse ausgerichtet sein. Die Ausrichtung einer Komponente des Antriebsstrangs, wie dieser Achse, kann die Ungenauigkeiten bei verschiedenen Anwendungen aufgrund von Toleranzvariationen der Räder oder des Rahmens reduzieren. Die koaxiale Ausrichtung des Schaltwerks mit der Kassette kann auch einen gleichmäßigen radialen Abstand zwischen Teilen des Schaltwerks und der Kassette über verschiedene Umdrehungen des Schaltwerks hinweg erleichtern.

Die Antriebsanordnung kann auch für Steifigkeit konfiguriert werden, um die Präzision zu erhöhen oder/und die relative Ausrichtung von Komponenten zu verbessern. Beispielsweise können einschlägige Komponenten und Elemente des hinteren Schaltwerks, der Hinterradachsanordnung mit der Hinterradnabe und der Ritzelkassette des hinteren Laufrads und die diesen zugeordneten Rahmenschnittstellen des Hinterbaus des Fahrradrahmens so in Bezug aufeinander konfiguriert werden, dass einerseits das Schaltwerk zuverlässig und in höchstens unschädlichem Ausmaß abhängig von Toleranzen richtig relativ zu der Ritzelkassette und der über diese laufende Kette am Rahmen positioniert und montiert ist und zugleich eine gute Steifigkeit erreicht wird, so dass diese richtige Positionierung auch im Fahrbetrieb trotz ggf. größerer und wechselnder Belastungen je nach dem Untergrund auf dem gefahren wird erhalten bleibt.

So ist eine entsprechend aufeinander abgestimmte Konfiguration des sog. B-Knuckle (oder Basiselements) eines hinteren Schaltwerks, also diejenige Teilkomponente eines hinteren Schaltwerks, die an einer zugeordneten Rahmenschnittstelle montiert wird, des Hinterbaus des Fahrradrahmens und speziell dessen Rahmenschnittstellen, an denen die Hinterradachsordnung des hinteren Laufrads und das hintere Schaltwerk montiert wird, und der Hinterradachsanordnung möglich, um Anforderungen unter den angesprochenen Zielsetzungen der richtigen Positionierung und Ausrichtung, Präzision und Steifigkeit gerecht zu werden.

Vor diesem technischen Hintergrund betrifft die vorliegende Erfindung allgemein ein hinteres Schaltwerk einer Fahrradkettenschaltung und die Art und Weise der Montage des hinteren Schaltwerks in Relation zu einer Hinterradachse an einem Fahrradrahmen und damit auch einen eine geeignete Rahmenschnittstelle für das hintere Schaltwerk aufweisenden Fahrradrahmen.

### Stand der Technik

Herkömmlich wurden hintere Schaltwerke am rechten Ausfallende des Rahmens mit Hilfe eines gegenüber dem Rahmen gesonderten oder zum Rahmen zugehörigen Schaltauges montiert, und zwar versetzt gegenüber der Hinterradachse und damit nicht-koaxial in Bezug auf die Hinterradachse.

Das Schaltauge wird dazu an seinem einen Ende koaxial mit der Hinterradachse am Rahmen festgelegt und an seinem anderen Ende mit dem Basiselement (B-Knuckle) des Schaltwerks verbunden. Das Basiselement ist relativ zum Schaltauge um die B-Achse drehbar. Schaltaugen unterscheiden sich je nach Hersteller und Anbringungsart stark voneinander. Sie können einteilig mit dem Rahmen ausgebildet sein oder als separates Bauteil vorliegen. Separate Schaltaugen werden entweder über Schnellspannachsen oder über Steckachsen am Rahmen geklemmt. Sowohl die Klemmung auf der Rahmenaußenseite, als auch auf der Rahmeninnenseite ist möglich. Das führt dazu, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden. Durch das zusätzliche Bauteil kommen Toleranzen hinzu, die sich negativ auf die Positionierungsgenauigkeit des Schaltwerks auswirken.

Außerdem sind Schaltaugen, gerade als separate Bauteile, schadensanfällig und oftmals instabil. Bei großen Ritzelpaketen und entsprechend großen Schaltwerksdimensionen treten erhöhte Hebelkräfte auf, die von einem austauschbaren Schaltauge nur ungenügend aufgenommen werden können. Darüber hinaus wirken sich die vergrößerten Schaltwerksdimensionen mit den verlängerten Hebelverhältnissen zusätzlich negativ auf die Positionierungsgenauigkeit des Schaltwerks aus. Im Konflikt dazu steht, dass gerade eine erhöhte Anzahl von eng nebeneinander angeordneten Ritzeln eine erhöhte Positionierungsgenauigkeit verlangt

Im Hinblick auf diese und andere Nachteile solch einer Montage des hinteren Schaltwerks am Rahmen hat die Anmelderin SRAM Deutschland GmbH einen neuen Typ eines hinteren Schaltwerks zur in Bezug auf die Hinterradachse koaxialen Montage an einem entsprechend ausgestalteten Fahrradrahmen entwickelt, auf welches anhängige Patentanmeldungen gerichtet sind. Der Fahrradrahmen weist eine spezielle Schnittstelle für das hintere Schaltwerk auf, die zugleich, unter Mitwirkung eines Rahmenadapters des hinteren Schaltwerks, als Rahmenschnittstelle für die Hinterachsanordnung auf der einen axialen Rahmenseite dient. Ferner sind diese Rahmenschnittstelle einschließlich dem Basiselement (B-Knuckle) und dem Rahmenadapter und die Rahmenschnittstelle auf der anderen axialen Rahmenseite für die Hinterachsanordnung einerseits und die Hinterachsanordnung anderseits geeignet in Bezug aufeinander konfiguriert. Hierdurch werden nicht nur die genannten Nachteile überwunden, sondern es kann überdies eine hinreichende oder gar sehr gute Steifigkeit der Anordnung des Schaltwerks an seiner Rahmenschnittstelle erreicht werden. Es kann zuverlässig den eingangs angesprochenen Zielsetzungen der richtigen Positionierung, Ausrichtung und Präzision entsprochen werden.

Es wird diesbezüglich auf die als DE 10 2018 001 253 A1 veröffentlichte Deutsche Patentanmeldung Az. 10 2018 001 253.1, die als EP 3 388 324 A2 veröffentlichte Europäische Patentanmeldung Az. 18 000 255.2, die als TW 2018 34 921 A veröffentlichte Taiwanesische Patentanmeldung Az. 107 107 712, die als CN 10 8622 302 A veröffentlichte Chinesische Patentanmeldung Az. 2018 1021 7966.9 und die als US 2018/0265169 A1 veröffentlichte US-Anmeldung Az. 15/926,194 verwiesen, die auf die SRAM Deutschland GmbH zurückgehen.

Aus diesen Druckschriften ist ein hinteres Schaltwerk zur in Bezug auf eine Hinterradachse koaxialen Montage an einem Fahrradrahmen eines Fahrrads bekannt. Das bekannte Schaltwerk weist ein Basiselement, einen Schwenkmechanismus, ein bewegliches Element und eine Kettenführungsanordnung auf. Der Schwenkmechanismus verbindet das Basiselement mit dem beweglichen Element und die Kettenführungsanordnung ist um eine Drehachse drehbar mit dem beweglichen Element verbunden. Das Basiselement umfasst ein erstes Anschlussende zur in Bezug auf die Hinterradachse koaxialen Montage an dem Fahrradrahmen und ein zweites Anschlussende zur Kopplung mit dem Schwenkmechanismus. Das erste Anschlussende weist einen ersten Arm und einen zweiten Arm auf, die in axialer Richtung voneinander beabstandet angeordnet und zur Montage des Schaltwerks an einem zugeordneten Halterungsabschnitt (insbesondere Ausfallende oder Rahmenauge) eines Hinterbaus des Fahrradrahmens mittels eines zugehörigen Adapters eingerichtet sind. Der Adapter weist wenigstens ein Gewinde zur Herstellung einer Schraubverbindung auf. In einem definierten vormontierten Zustand und in einem fertig montierten Zustand befindet sich der erste Arm auf einer axialen Innenseite des Halterungsabschnitts und befindet sich der zweite Arm auf einer axialen Außenseite des Halterungsabschnitts.

Ein solches hinteres Schaltwerk, das dem Oberbegriff von Anspruch 1 zugrunde liegt, ist auch aus den Veröffentlichungen DE 10 2018 206 104 A1, EP 3 556 643 A1, CN 11 0386 220 A und US 2019/0322333 A1 bekannt.

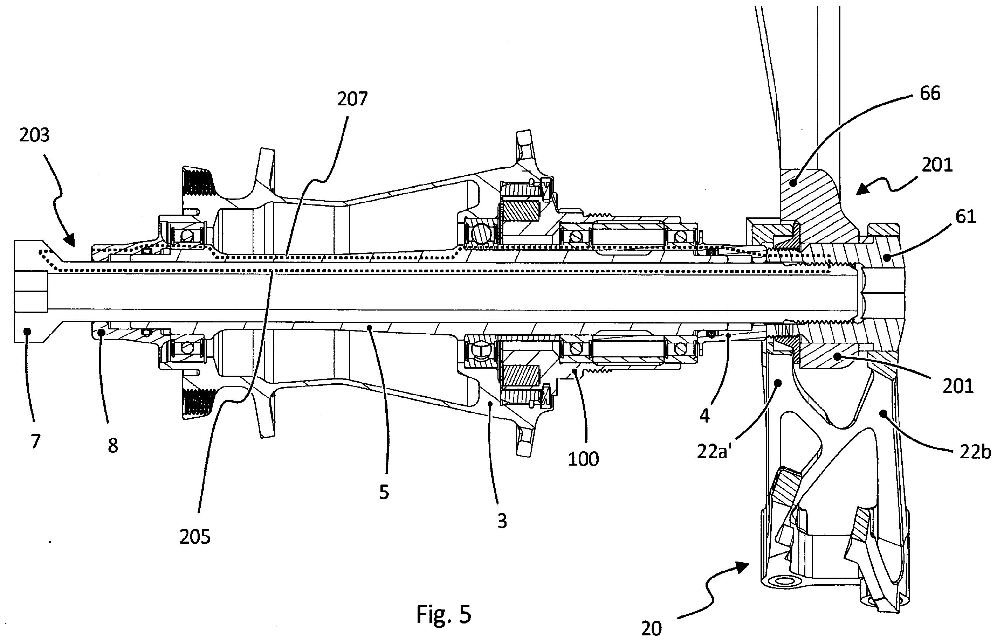

Im Folgenden wird nur noch auf die kurz auch nur als EP'324 angesprochene Druckschrift EP 3 388 324 A2 ausdrücklich Bezug genommen, auch als Repräsentantin der beiden angesprochenen Patentfamilien. Die nachfolgende Beschreibung der Erfindung in ihren verschiedenen Aspekten und diese konkretisierender Ausführungsbeispiel greift auf die in der Druckschrift EP'324 geprägten Definitionen, Zusammenhänge und Begrifflichkeiten zurück, und der Inhalt dieser Druckschrift ist ausdrücklich ein Bestandteil der vorliegenden Erfindungsbeschreibung, nicht nur hinsichtlich der in der EP'324 geprägten Definitionen und technischen Zusammenhänge. Gemäß der EP'324 wird, wie im Detail aus den dortigen Fig. 5 bis 8 ersichtlich, zur Montage des Schaltwerks 10 ein Rahmenadapter 60 verwendet. Der Rahmenadapter 60 wird mit einem rechten Ausfallende bzw. Rahmenauge des Hinterbaus eines Fahrradrahmens so verschraubt, dass die zu dem Rahmenadapter 60 gehörige Rändelmutter bzw.

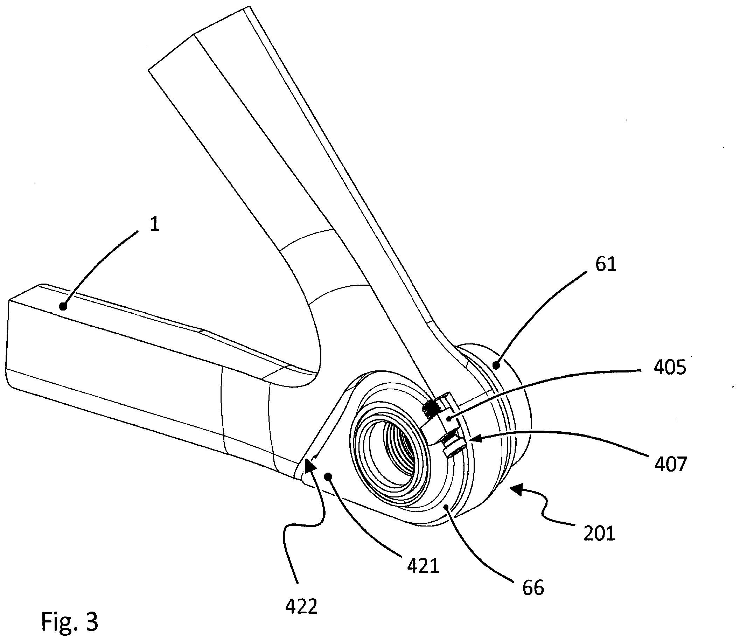

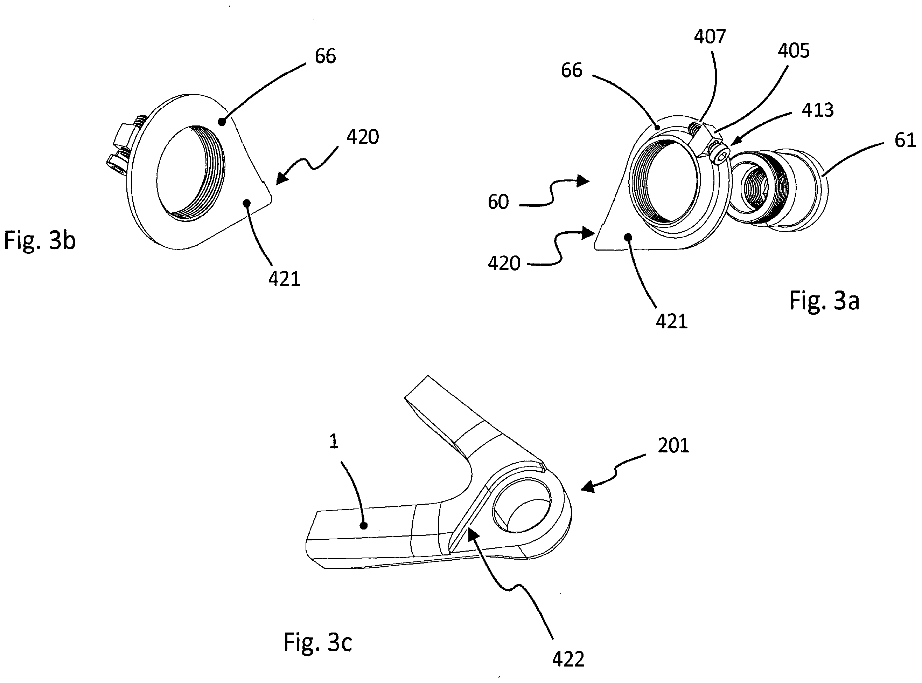

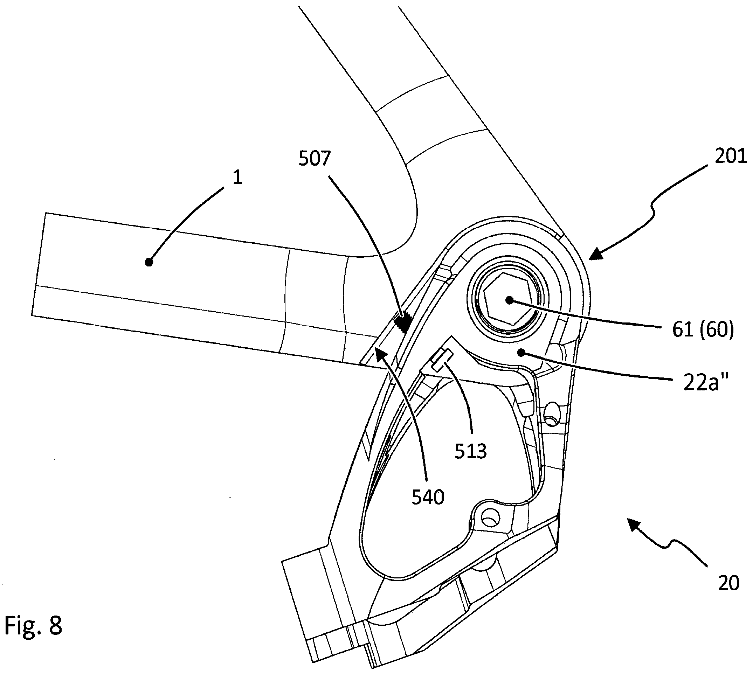

Adaptermutter 66 mittels ihrer stirnseitigen Rändelung durch form- bzw. reibschlüssige Anlage an der Innenseite des rechten Rahmenauges eine definierte rotatorische Winkelstellung relativ zu dem Rahmenauge erhält. Mittels dieser definierten rotatorischen Winkelstellung der Adaptermutter 66 lässt sich durch Anschlag des Basiselements (sog. B-Knuckle) des Schaltwerks an rotatorischen Anschlagsvorsprüngen 68a/b der Adaptermutter 66 (vgl. Fig. 8 der EP'324) eine entsprechende rotatorische Schwenkposition des Schaltwerks 10 bezogen auf die Fahrrad-Hinterachse einstellen und fixieren. Hierdurch erhält die Fahrradkette, mittels der in üblicher Weise zwischen dem schaltbeweglichen Element (sog. P-Knuckle 40, vgl. Fig. 3 der EP'324) und der Kettenführungsanordnung (sog. Kettenkäfig 50, vgl. Fig. 3 der EP'324) befindlichen Torsionsfeder die gewünschte bzw. für optimale Schaltfunktion erforderliche Kettenspannung. Ein Ablauf dieses Einstellvorgangs zur Herstellung der gewünschten Kettenspannung ist in der EP'324 in den Absätzen [0089] bis [0090] im Detail beschrieben, und kann sinngemäß ebenso bei der koaxialen Schaltwerksanbindung gemäß der vorliegenden Erfindung stattfinden. EP 3 388 324 A2 offenbart die Merkmale des Oberbegriffs von Anspruch 1.

### Erfindung

Ausgehend von dem vorgenannten Stand der Technik stellt die vorliegende Erfindung alternative Lösungen und Weiterbildungen zu den bekannten Lösungen zur Hinterachs-koaxialen Anbindung eines Fahrrad-Schaltwerks an das rechte Rahmenauge oder Ausfallende eines Fahrradrahmen-Hinterbaus bereit, aus denen sich diverse Vorteile ergeben.

Gemäß einem ersten Aspekt wird für das eingangs definierte hintere Schaltwerk vorgeschlagen, dass das Basiselement mit einer wenigstens eine manuell betätigbare Verstellschraube aufweisenden Einstelleinrichtung ausgeführt ist. Mittels der Einstelleinrichtung kann vorteilhaft das Basiselement in wenigstens einem von dem vormontierten Zustand und dem fertig montierten Zustand relativ zu wenigstens einem von dem Adapter und dem Halterungsabschnitt koaxial zur Hinterradachse in einer Kettenspannrichtung verschwenkbar sein. Alternativ kann mittels der Einstelleinrichtung ein das zweite Anschlussende aufweisendes, an einem ersten Teilelement des Basiselements schwenkbar angelenktes zweites Teilelement des Basiselements relativ zu dem das erste Anschlussende aufweisenden ersten Teilelement in einer Kettenspannrichtung verschwenkbar sein. Zweck dieser Verstellung ist, in dem fertigen montierten oder/und dem vormontierten Zustand des hinteren Schaltwerks am Fahrradrahmen eine Kettenspannung einer durch die Kettenführungsanordnung geführten, über ein Ritzel eines Ritzelpakets eines Hinterrads des Fahrrads laufenden Fahrradkette oder/und einen Abstand eines oberen Kettenführungsröllchens der Kettenführungsanordnung von dem Ritzel einzustellen.

Es kann sich dabei um eine gegenüber der aus der EP '324 bekannte Einstell- und Justagemöglichkeit zusätzliche Einstell- und Justagemöglichkeit oder um eine alternative Einstell- und Justagemöglichkeit handeln. Die Einstellung der Kettenspannung bzw. des Abstands des oberen Kettenführungsröllchens von einem bestimmten Referenzritzel des Ritzelpakets (sog. Chain Gap, wobei das Referenzritzel nicht notwendigerweise das kleinste oder das größte Ritzel des Ritzelpakets ist) ist in der Praxis von großer Bedeutung. Der Erfindungsvorschlag ermöglicht eine Feineinstellung bzw. Nacheinstellung, beispielsweise auch zur Berücksichtigung eines Kettenverschleißes und einer damit verbundenen Längung der Fahrradkette. Gegenüber der aus der EP '324 bekannten Lösung wird diese Einstellung bzw. Nachstellung oder Feinjustage erleichtert.

Es wird vor allem daran gedacht, dass bei gespannter Fahrradkette mittels der Einstelleinrichtung eine in einer Kettenspannrichtung wirkende Schwenkkraft auf das Basiselement ausübbar ist, die einer auf das Basiselement ausgeübten, auf einer Spannung der Fahrradkette beruhenden Gegen-Schwenkkraft in einer Kettenentspannungsrichtung entgegensetzt ist.

Betreffend die alternative Lösung mit einem mehrteiligen, das erste Teilelement und das zweite Teilelement aufweisenden Basiselement wird daran gedacht, dass bei gespannter Fahrradkette mittels der Einstelleinrichtung eine in einer Kettenspannrichtung wirkende Schwenkkraft auf das zweite Teilelement ausübbar ist, die einer auf das zweite Teilelement ausgeübten, auf einer Spannung der Fahrradkette beruhenden Gegen-Schwenkkraft in einer Kettenentspannungsrichtung entgegensetzt ist.

Soweit die Einstelleinrichtung unmittelbar nur in die Kettenspannrichtung wirkende Schwenkkräfte auf das Basiselement bzw. das zweite Teilelement ausüben kann, wie dies typischerweise bei einer auf Druck belasteten Einstellschraube der Fall sein wird, kann die auf der Spannung der Fahrradkette beruhende Gegen-Schwenkkraft dafür ausgenutzt werden, das Basiselement bzw. das zweite Teilelement in der Kettenentspannungsrichtung zu verschwenken, wenn dies bei der Einstellung bzw. Nachstellung oder Feinjustage der Kettenspannung bzw. des "Chain Gap" gewünscht sein sollte.

Betreffend den an der Montage des Basiselements am Fahrradrahmen mitwirkenden Adapter wird daran gedacht, dass (analog zu EP '324) der Adapter einen von einer Außenseite des Halterungsabschnitts in einen Durchgang des Halterungsabschnitts einführbaren Adapterbolzen mit einem Außengewinde aufweist. Zweckmäßig kann der Adapter ferner eine Adaptermutter mit einem Innengewinde umfassen, das innenseitig des Halterungsabschnitts mit dem Außengewinde des Adapterbolzens verschraubbar ist.

Alternativ und von den Vorschlägen der EP '324 abweichend kann der Adapter aber auch einteilig ausgeführt sein.

Analog zu EP '324 kann der Adapter, insbesondere der Adapterbolzen, eine Achsöffnung aufweisen, in der ein Innengewinde angeordnet ist, in welches ein Gegengewinde einer zugeordneten Steckachse schraubbar ist. Abgesehen von einer gegebenenfalls noch nötigen Einstellung der Kettenspannung bzw. der "Chain Gap" wird das Einschrauben und Festziehen der Steckachse in der Regel die Montage des hinteren Schaltwerks am Fahrradrahmen abschließen, also den angesprochenen "fertig montierten Zustand" zur Folge haben. Als "definierter vormontierter Zustand" soll insbesondere ein solcher Zustand angesehen werden, dass die Steckachse (wenn vorgesehen) noch nicht in das Innengewinde des Adapterbolzens eingeschraubt oder zwar schon eingeschraubt aber noch nicht festgezogen ist. Bei einer im Folgenden vorgeschlagenen alternativen Realisierung, bei der der einteilige Adapter mit dem ersten Arm des Basiselements auf der Innenseite des Haltungselements zu verschrauben ist, kann ein Zustand ohne Festziehen des Adapters in dem entsprechenden Innengewinde des ersten Arms als "definierter vormontierter Zustand" angesehen werden.

Allgemein ist der hier angesprochene "definierte vormontierte Zustand" ein Zustand des hinteren Schaltwerks, in dem das Basiselement mit vergleichsweise geringen Schwenkkräften relativ zum Fahrradrahmen verschwenkbar ist, insbesondere bei Ausgestaltungen, wenn durch Anziehen einer Schraubverbindung ein Reibschluss oder Formschluss hergestellt wird, der eine solche Verschwenkbarkeit des Basiselements relativ zum Fahrradrahmen mit vergleichsweise geringen Schwenkkräften verhindert, wie es bei dem aus der EP '324 bekannten hinteren Schaltwerk im "fertig montierten Zustand" der Fall ist.

Wie als solches aus der EP '324 bekannt, können ein Innendurchmesser einer im ersten Arm vorgesehenen ersten Zentrieröffnung des Basiselements und ein erster Außendurchmesser des Adapters, insbesondere eines Bolzenfußes des Adapterbolzens, aufeinander abgestimmt sein, um vermittels des Adapters das Schaltwerk in Bezug auf die Hinterradachse zu zentrieren. Man kann alternativ auch daran denken, dass ein Innendurchmesser einer im ersten Arm vorgesehenen ersten Zentrieröffnung des Basiselements und ein zugeordneter Außendurchmesser der Steckachse aufeinander abgestimmt sind, um vermittels der Steckachse das Schaltwerk in Bezug auf die Hinterradachse zu zentrieren. Diese Möglichkeit ist ebenfalls schon als solches aus der EP'324 bekannt.

Ferner kann analog zu den Lösungen der EP '324 im fertig montierten Zustand des hinteren Schaltwerks der erste Arm zwischen einer axialen Anschlagfläche des Adapters und einer axialen Anschlagfläche eines Anschlagelements, insbesondere einer Nabenendkappe, einer Hinterradachsanordnung eines hinteren Laufrads der Fahrrads eingespannt sein.

Alternativ zu den genannten Lösungen zur Zentrierung wird vorgeschlagen, dass ein Innendurchmesser einer im ersten Arm vorgesehenen ersten Zentrieröffnung des Basiselements und ein Außendurchmesser des schon angesprochenen Anschlagelements, insbesondere Nabenendkappe, einer Hinterradachsanordnung eines hinteren Laufrads des Fahrrads aufeinander abgestimmt sind, um vermittels des Anschlagelements das Schaltwerk in Bezug auf die Hinterradachse zu zentrieren. Auch so lässt sich eine gute und zuverlässige Zentrierung des Basiselements und damit die vorgesehene koaxiale Montage in Bezug auf die Hinterradachse des hinteren Schaltwerks erreichen. An eine Einspannung des ersten Arms zwischen einer axialen Anschlagfläche des Adapters und einer axialen Anschlagfläche des Anschlagelements wird in diesem Zusammenhang weniger gedacht, obwohl eine solche Realisierung durchaus in Betracht kommt.

Abweichend von den Lösungen der EP '324 wird weiter vorgeschlagen, dass im fertig montierten Zustand des hinteren Schaltwerks eine axiale Anschlagfläche des schon angesprochenen Anschlagelements, insbesondere Nebenendkappe, der Hinterradachsanordnung an einer axialen Anschlagfläche des Adapters unter Spannung unmittelbar anliegt. In diesem Fall bietet sich das Anschlagelement als Referenz für die Zentrierung des ersten Arms und damit des Basiselements als gute Lösung an, wie vorgeschlagen.

Ein geschlossener Kraftfluss über die an den Rahmenaugen montierte Hinterachsanordnung wird im Fall dieser Abstützung des Anschlagelements an der Anschlagfläche des Adapters unter Umgehung des ersten Arms und vorzugsweise auch des zweiten Arms des Basiselements erreicht, sodass die angesprochene reibschlüssige rotatorische Fixierung des Basiselements im fertig montierten Zustand nicht auftritt. In diesem Fall führt das Festziehen der Steckachse oder dergleichen nicht zu einem Festspannen des Basiselements am hinteren Halterungsabschnitt des Fahrradrahmens, sodass die erfindungsgemäße Einstelleinrichtung benötigt wird, um einen Vorwärtsanschlag für das Basiselement vorzusehen und die Einstellung der Kettenspannung bzw. des "Chain Gap" zu ermöglichen.

Nach einer schon kurz angesprochenen vorteilhaften Ausgestaltung kann der vorzugsweise einteilig als Adapterbolzen ausgeführte Adapter an einem Außengewinde mit einem Innengewinde des ersten Arms des Basiselements verschraubbar sein. Dieser Weiterbildungsvorschlag zielt auf eine Reduzierung der Anzahl und Komplexität der erforderlichen Einzelteile des hinteren Schaltwerks und damit auf eine Reduzierung der Herstellung- und Montagekosten. Insbesondere kann nach diesem Weiterbildungsvorschlag auf die Adaptermutter verzichtet werden.

Gemäß einer ersten Ausführungsvariante ist vorgesehen, dass der Adapter sowie der erste Arm und der zweite Arm des Basiselements dafür eingerichtet sind, durch Festziehen des Adapters den axiale Anlageflächen aufweisende Halterungsabschnitt des Fahrradrahmens zwischen zugeordneten axialen Anlageflächen des ersten Arms und des zweiten Arms oder zwischen zugeordneten axialen Anlageflächen des ersten Arms und eines Bolzenkopfs des Adapters axial einzuspannen. Durch Festziehen des Adapters wird das Basiselement am Halterungsabschnitt des Fahrradrahmens rotatorisch fixiert, im Endeffekt so wie dies nach der bekannten Lösung der EP '324 durch das Einschrauben und Festziehen der Steckachse erreicht wird. Die Einstellung der Kettenspannung bzw. des "Chain Gap" muss dementsprechend vor diesem Festziehen des Adapters im Innengewinde des ersten Arms erfolgen, sofern man nicht das Basiselement mit den gegeneinander verschwenkbaren Teilelementen ausführt.

Nach einer alternativen zweiten Variante ist vorgesehen, dass eine Abstandshülse bereitgestellt ist, die dafür dimensioniert ist, in einen Durchgang des Halterungsabschnitts des Fahrradrahmens aufgenommen zu werden. Der Adapter und die Abstandshülse sowie der erste Arm und der zweite Arm des Basiselements sind dafür eingerichtet, durch Festziehen des Adapters die in den Durchgang des Halterungsabschnitts des Fahrradrahmens aufgenommene Abstandshülse zwischen zugeordneten axialen Anlageflächen des ersten Arms und des zweiten Arms oder zwischen zugeordneten axialen Anlageflächen des ersten Arms und eines Bolzenkopfs des Adapters axial einzuspannen.

In diesem Fall führt das Festziehen des Adapters nicht zu einem Festspannen des Basiselements am hinteren Halterungsabschnitt des Fahrradrahmens, sodass die erfindungsgemäße Einstelleinrichtung benötigt wird, um einen Vorwärtsanschlag für das Basiselement vorzusehen und die Einstellung der Kettenspannung bzw. des "Chain Gap" zu ermöglichen.

Allgemein wird daran gedacht, dass ein Innendurchmesser einer im zweiten Arm vorgesehenen zweiten Zentrieröffnung des Basiselements und ein zweiter Außendurchmesser des Adapters, insbesondere eines Bolzenkopfes des Adapters aufeinander abgestimmt sind, um vermittels des Adapterbolzens das Schaltwerk in Bezug auf die Hinterradachse zu zentrieren. Insoweit entspricht das hintere Schaltwerk der bekannten Lösung gemäß EP '324. Der zweite Arm wird dabei vorzugsweise durch den Eingriff des Adapters mit dem zweiten Arm des Basiselements nicht rotatorisch am Halterungsabschnitt des Fahrradrahmens fixiert.

Wie als solches aus der EP '324 bekannt, kann der Adapter zumindest bereichsweise derart rotatorisch neutral, insbesondere in Wesentlichen rotationssymmetrisch, ausgeführt sein, dass keine bestimmte rotatorische Orientierung des Adapters relativ zu dem Halterungsabschnitt vorgesehen ist und keine Verdrehung des Adapters relativ zu dem Halterungsabschnitt blockiert oder begrenzt wird.

Als vorteilhafte Alternative hierzu wird vorgeschlagen, dass der Adapter nicht-rotationssymmetrisch ausgeführt ist, um mit einer zugeordneten Formation des Fahrradrahmens in formschlüssigen Drehabstützeingriff treten zu können. Insbesondere kann der Adapter mit wenigstens einem Anschlag ausgeführt sein, der mit wenigstens einem zugeordneten Gegenanschlag des Fahrradrahmens, insbesondere des Halterungsabschnitts, formschlüssig zum Eingriff bringbar ist, um den Adapter zumindest im fertig montieren Zustand gegen Verdrehung in wenigstens einer Richtung relativ zu dem Fahrradrahmen zu sichern.

Die weiter als zweckmäßig und generell vorteilhaft anzusehende Lösung gemäß der EP '324 kann beispielsweise aus Kostengründen oder aus Gründen unterschiedlicher Oberflächenbeschaffenheiten der Adaptermutter-Anlagefläche am Rahmenauge, je nach Rahmenausführung und Rahmenmaterial, nicht immer die beste Lösung sein. Der Weiterbildungsvorschlag zielt auch auf Fälle zu erwartender extremer Belastungen, für die die vorgeschlagene formschlüssige Fixierung des Adapters besonders günstig erscheint.

Weiterbildend wird vorgeschlagen, dass der Anschlag und der Gegenanschlag dafür eingerichtet sind, den Adapter gegen eine Verdrehung in einer ersten Drehrichtung relativ zu dem Halterungsabschnitt zu sichern, die der zu der Kettenspannrichtung entgegengesetzten Kettenentspannungsrichtung entspricht. Im Prinzip könnte auch eine formschlüssige Verdrehsicherung in einer zur ersten Drehrichtung entgegengesetzten zweiten Drehrichtung vorgesehen sein. Demgegenüber wird aber als besonders zweckmäßig zusätzlich vorgeschlagen, dass der Anschlag und der Gegenanschlag dafür eingerichtet sind, eine Verdrehung des Adapters in der zur ersten Drehrichtung entgegengesetzten zweiten Drehrichtung relativ zu dem Halterungsabschnitt nicht zu blockieren. In Bezug auf diese zweite Drehrichtung ist nämlich die als solches aus der EP '324 bekannte reibschlüssige Fixierung des Basiselements gegen Verdrehung deutlich vorteilhafter. Das Schaltwerk kann dann im Falle einer relativ starken Krafteinwirkung, wie sie beispielsweise während der Fahrt etwa in Folge einer Kollision mit einem Hindernis wie etwa einem Ast auftreten könnte, weiterhin in der zweiten Drehrichtung verschwenkt werden. So kann die Energie einer solchen Schaltwerkkollision über einen relativ großen Weg und damit anhand relativ kleiner Kräfte aufgenommen und reibschlüssig gedämpft werden, um Beschädigung des Schaltwerks zu vermeiden.

Nach einer bevorzugten Ausführungsform bilden eine Anschlagfläche eines radial vorstehenden Anschlagvorsprungs der als mögliche Teilkomponente des Adapters schon angesprochenen Adaptermutter den Anschlag und eine Gegenanschlagfläche einer Oberflächenkontur des Halterungsabschnitts oder einer diesem benachbarten Formation des Fahrradrahmens den Gegenanschlag.

Gemäß allen vorstehenden erwähnten Ausgestaltungsvarianten kann eine dem Halterungsabschnitt des Fahrradrahmens zugewandte Anlagefläche der Adaptermutter (wenn vorgesehen) des Adapters mit einer Rändelung zur Reibschlussvergrößerung ausgeführt sein, wie an sich aus der EP '324 bekannt.

Betreffend die konkrete Realisierung der erfindungsgemäßen Einstelleinrichtung bestehen grundsätzlich viele Möglichkeiten. Ohne Beschränkung der Allgemeinheit ist es bevorzugt, dass die Einstelleinrichtung an einem ersten Element einen Gewindesockel aufweist, mit welchem die Verstellschraube in Schraubeingriff steht. An einem zweiten Element ist ein der Verstellschraube zugeordneter Anschlag vorgesehen. Der Anschlag und ein durch Verdrehen der Verstellschraube in dem Gewindesockel variabel positionierbares Ende der Verstellschraube sind dazu ausgebildet, einen verstellbaren Verdrehanschlag für das Basiselement zu bilden. Im Falle der angesprochenen alternativen Lösung können der Anschlag und das durch Verdrehen der Verstellschraube in dem Gewindesockel variabel positionierbare Ende der Verstellschraube dazu ausgebildet sein, einen verstellbaren Verdrehanschlag für das das zweite Anschlussende aufweisende zweite Teilelement des Basiselements in der der Kettenentspannungsrichtung entsprechenden Drehrichtung zu bilden.

Betreffend den Begriff Gewindesockel sei angemerkt, dass ein eine spezielle Geometrie oder Struktur aufweisendes Element zur Realisierung des erfindungsgemäßen Gewindesockels nicht zwingend ist. Dieser Begriff soll auch einen mit einer Gewindeöffnung versehenen Abschnitt einer der in Frage kommenden Komponenten handelt, ist also rein funktionell zu verstehen. Es kommt aber auch durchaus in Betracht, dass ein eine spezielle Geometrie oder Struktur aufweisendes Element als erfindungsgemäßer Gewindesockel identifizierbar ist.

Zweckmäßig wird die Verstellschraube im vormontierten Zustand oder/und im fertig montierten Zustand auf Grundlage der Kettenspannung auf Druck belastet. Im Falle der Realisierung des Basiselements mit dem ersten Teilelement und dem zweiten Teilelement ist hingegen eine andersartige Verstelleinrichtung bevorzugt, die die Verstellschraube auf Grundlage der Kettenspannung auf Zug belastet.

Nach einer besonders bevorzugten Realisierung bildet der Adapter eines von dem ersten Element und dem zweiten Element und das Basiselement das andere von dem ersten und dem zweiten Element. Dabei wird vor allem, aber nicht ausschließlich, daran gedacht, dass der Adapter, insbesondere dessen Adaptermutter, als erstes Element den Gewindesockel und das Basiselement als zweites Element den Anschlag aufweist. Vorteilhaft kann der Gewindesockel von dem Adapter bzw. dessen Adaptermutter radial vorstehen.

Es handelt sich hier um eine sehr zweckmäßige und einfach realisierbare Ausgestaltung der genannten Komponenten, um das hintere Schaltwerk mit der erfindungsgemäßen Einstelleinrichtung auszuführen.

Weiterbildend wird diesbezüglich vorgeschlagen, dass der Gewindesockel sich in eine Aussparung oder ein Fenster eines sich in Umfangsrichtung um die Adaptermutter erstreckenden Abschnitts des ersten Arms oder des zweiten Arms (bevorzugt des ersten Arms) des Basiselements hinein erstreckt. Es kann dann eine die Aussparung oder das Fenster in Umfangsrichtung begrenzende Oberfläche des ersten Arms bzw. des zweiten den Anschlag für die Verstellschraube bilden.

Gemäß einer alternativen Realisierungsmöglichkeit bilden der Halterungsabschnitt oder eine diesem benachbarte Formation des Fahrradrahmens eines von dem ersten Element und dem zweiten Element und das Basiselement bildet das andere von dem ersten und dem zweiten Element. Diesbezüglich wird als besonders zweckmäßig vorgeschlagen, dass das Basiselement als erstes Element den Gewindesockel und der Halterungsabschnitt oder die diesem benachbarte Formation des Fahrradrahmens als zweites Element den Anschlag aufweist. So kann auf einen Gewindesockel am Fahrradrahmen verzichtet werden, was im Hinblick auf die Verwendung des Fahrradrahmens mit einem nicht der Erfindung entsprechenden hinteren Schaltwerk vorteilhaft ist. Ein möglicherweise keine Funktion erfüllender Anschlag ist in einer solchen Situation leichter hinnehmbar als ein keine Funktion erfüllender Gewindesockel. Diese Lösung für die Realisierung der Einstelleinrichtung wird für solche Ausführungsformen bevorzugt, bei denen der Adapter mit dem ersten Arm des Basiselements verschraubt ist.

Betreffend die Realisierung des Basiselements mit dem ersten Teilelement und dem zweiten Teilelement gemäß der angesprochenen alternativen Lösung wird vorgeschlagen, dass die Einstelleinrichtung an einem vom ersten Teilelement und zweiten Teilelements des Basiselements einen Gewindesockel und am anderen Teilelement des Basiselements einen Anschlag oder eine Drehhalterung oder einen weiteren Gewindesockel aufweist. Die Verstellschraube steht mit dem Gewindesockel bzw. - wenn vorgesehen - mit den beiden, entgegengesetzt orientierte Innengewinde aufweisenden Gewindesockeln in Gewindeeingriff. Im Falle der Drehhalterung ist die Verstellschraube in dieser Drehhalterung des anderen Teilelements verdrehbar und zumindest in Bezug auf Zug in einer Längsrichtung der Verstellschraube abstützbar gehalten. Ist an dem anderen Teilelement der Anschlag vorgesehen, ist die Verstellschraube an diesem Anschlag in Bezug auf Druck abstützbar. Diese Elemente sind jeweils derart angeordnet, dass mittels der Verstellschraube ein Schwenkwinkel des zweiten Teilelements relativ zu dem ersten Teilelement einstellbar ist.

Gemäß einer ersten Variante ist die Verstellschraube im vormontierten Zustand oder/und im fertig montierten Zustand auf Grundlage der Kettenspannung auf Druck belastbar. Gemäß einer bevorzugten zweiten Variante ist die Verstellschraube im vormontierten Zustand oder/und im fertig montierten Zustand auf Grundlage der Kettenspannung auf Zug belastbar. Besonders zweckmäßig kann die Einstelleinrichtung hierzu an einem Teilelement einen Gewindesockel und am anderen Teilelement eine Drehhalterung aufweisen. Die Drehhalterung kann von einer einfachen Durchgangsöffnung eines geeigneten Elements des betreffenden Teilelements gebildet sein, durch welche die Einstellschraube gesteckt ist, wobei ein Schraubenkopf die wirkenden Zugkräfte an diesem die Durchgangsöffnung aufweisenden Element abstützt.

Allgemein wird vorgeschlagen, dass ein Kopf der Verstellschraube mit einer Werkzeugeingriffsformation ausgeführt ist. Vorzugsweise ist der Kopf im montierten Zustand des hinteren Schaltwerks am Fahrradrahmen von hinten her zugänglich.

Gemäß einem vom ersten Aspekt unabhängigen zweiten Aspekt schlägt die Erfindung für ein hinteres Schaltwerk der eingangs genannten Art vor, dass der Adapter mit einem Anschlag ausgeführt ist, der mit einem zugeordneten Gegenanschlag des Fahrradrahmens, insbesondere des Halterungsabschnitts, formschlüssig zum Eingriff bringbar ist, um den Adapter zumindest im fertig montieren Zustand gegen Verdrehung in wenigstens einer Richtung relativ zu dem Fahrradrahmen zu sichern.

Wie oben zum entsprechenden Weiterbildungsvorschlag für das hintere Schaltwerk nach dem ersten Aspekt der Erfindung ausgeführt, bildet ein solcher Adapter für manche Situationen eine vorteilhafte Alternative zur aus der EP '324 an sich bekannten rotatorischen Fixierung der Adaptermutter und damit des gesamten Adapters.

Auch für das hintere Schaltwerk nach dem zweiten Erfindungsaspekt wird weiterbildend vorgeschlagen, dass der Anschlag und der Gegenanschlag dafür eingerichtet sind, den Adapter gegen eine Verdrehung in einer ersten Drehrichtung relativ zu dem Halterungsabschnitt zu sichern, die einer Kettenentspannungsrichtung entspricht. Besonders zweckmäßig können dabei der Anschlag und der Gegenanschlag dafür eingerichtet sein, eine Verdrehung des Adapters in einer zur ersten Drehrichtung entgegengesetzten zweiten Drehrichtung relativ zu dem Halterungsabschnitt nicht zu blockieren, um Beschädigungen des hinteren Schaltwerks in Folge von Kollisionen möglichst zu vermeiden, wie dargelegt.

Vorteilhaft kann eine Anschlagfläche eines radial vorstehenden Anschlagvorsprungs einer Adaptermutter des Adapters den Anschlag und eine Gegenanschlagfläche einer Oberflächenkontur des Halterungsabschnitt oder einer diesem benachbarten Formation des Fahrradrahmens den Gegenanschlag bilden.

Auch im Kontext des zweiten Erfindungsaspekts kann eine dem Halterungsabschnitt des Fahrradrahmens zugewandte Anlagefläche der Adaptermutter mit einer Rändelung zur Reibschlussvergrößerung ausgeführt sein.

Auch andere im Zusammenhang mit dem ersten Aspekt der Erfindung angesprochene Realisierungsmöglichkeiten kommen im Kontext des weiteren Erfindungsaspekts im Betracht. So kann der Adapter einen von einer Außenseite des Halterungsabschnitts in einen Durchgang des Halterungsabschnitts einführbaren Adapterbolzen mit einem Außengewinde aufweisen. Die vorzugsweise vorgesehene Adaptermutter kann ein Innengewinde aufweisen, das innenseitig des Halterungsabschnitts mit dem Außengewinde des Adapterbolzens verschraubbar ist. Vorzugsweise weist diese Adaptermutter den wenigstens einen Anschlag auf. Ferner kann der Adapter, insbesondere der Adapterbolzen, eine Achsöffnung aufweist, in der ein Innengewinde angeordnet ist, in welches ein Gegengewinde einer zugeordneten Steckachse schraubbar ist.

Diverse weitere Weiterbildungsmöglichkeiten ergeben sich aus den Erfindungs- und Weiterbildungsvorschlägen zum ersten Aspekt der Erfindung.

Nach einem dritten Aspekt der Erfindung, der vom ersten Aspekt und zweiten Aspekt der Erfindung unabhängig ist, wird für ein hinteres Schaltwerk der eingangs genannten Art vorgeschlagen, dass im fertig montierten Zustand des hinteren Schaltwerks eine axiale Anschlagfläche eines Anschlagelements, insbesondere einer Nabenendkappe, einer Hinterradachsanordnung eines hinteren Laufrads des Fahrrads an einer axialen Anschlagfläche des Adapters unter Spannung unmittelbar anliegt.

Ein geschlossener Kraftfluss wird in der Hinterachsanordnung dann unter Umgehung des ersten Arms des Basiselements hergestellt, wie zum entsprechenden Weiterbildungsvorschlag unter dem ersten Aspekt der Erfindung dargelegt. Eine Drehfixierung des Basiselements durch Einspannen dessen ersten Arms durch Festziehen des Steckachse bzw. einer (alternativ vorsehbaren) Schnellspannachse entfällt dann, sodass zumindest ein Vorwärts-Drehanschlag für das Basiselement auf andere Weise realisiert werden muss. Bevorzugt dient eine manuell betätigbare Einstelleinrichtung entsprechend dem ersten Aspekt der Erfindung als Vorwärts-Drehanschlag.

Um den ersten Arm trotzdem zur Zentrierung des Basiselements zu nutzen, können ein Innendurchmesser einer im ersten Arm vorgesehenen ersten Zentrieröffnung des Basiselements und ein Außendurchmesser eines Anschlagelements, insbesondere der angesprochenen Nabenendkappe, der Hinterradachsanordnung eines hinteren Laufrads des Fahrrads aufeinander abgestimmt sein, um vermittels des Anschlagelements das Schaltwerk in Bezug auf die Hinterradachse zu zentrieren.

Wie zum ersten und zum zweiten Erfindungsaspekt ausgeführt, kann der Adapter einen von einer Außenseite des Halterungsabschnitts in einen Durchgang des Halterungsabschnitts einführbaren Adapterbolzen mit einem Außengewinde aufweisen. Der Adapter umfasst vorzugsweise eine Adaptermutter mit einem Innengewinde, das innenseitig des Halterungsabschnitts mit dem Außengewinde des Adapterbolzens verschraubbar ist.

Auch im Zusammenhang mit dem dritten Aspekt der Erfindung wird vor allem daran gedacht, dass der Adapter, insbesondere der Adapterbolzen, eine Achsöffnung aufweist, in der ein Innengewinde angeordnet ist, in welches ein Gegengewinde einer zugeordneten Steckachse schraubbar ist.

Zweckmäßigerweise kann der Adapter an seinen mit dem Halterungsabschnitt des Fahrradrahmens zumindest bereichsweise derart rotatorisch neutral, insbesondere in Wesentlichen rotationssymmetrisch, ausgeführt sein, dass keine bestimmte rotatorische Orientierung des Adapters relativ zu dem Halterungsabschnitt vorgesehen ist und keine Verdrehung des Adapters relativ zu dem Halterungsabschnitt blockiert oder begrenzt wird.

Alternativ kann man im Hinblick auf manche Anwendungssituationen vorsehen, dass der Adapter nicht-rotationssymmetrisch ausgeführt ist, um mit einer zugeordneten Formation des Fahrradrahmens in formschlüssigen Drehabstützeingriff treten zu können. Insbesondere kann der Adapter mit einem Anschlag ausgeführt sein, der mit einem zugeordneten Gegenanschlag des Fahrradrahmens, insbesondere des Halterungsabschnitts, formschlüssig zum Eingriff bringbar ist, um den Adapter zumindest im fertig montieren Zustand gegen Verdrehung in wenigstens einer Richtung relativ zu dem Fahrradrahmen zu sichern.

Es wird vor allem daran gedacht, dass der Anschlag und der Gegenanschlag dafür eingerichtet sind, den Adapter gegen eine Verdrehung in einer ersten Drehrichtung relativ zu dem Halterungsabschnitt zu sichern, die einer Kettenentspannungsrichtung entspricht. Besonders zweckmäßig können dabei der Anschlag und der Gegenanschlag dafür eingerichtet sein, eine Verdrehung des Adapters in einer zur ersten Drehrichtung entgegengesetzten zweiten Drehrichtung relativ zu dem Halterungsabschnitt nicht zu blockieren, aus den zum ersten und zweiten Erfindungsaspekt dargelegten Gründen.

Besonders zweckmäßig können eine Anschlagfläche eines radial vorstehenden Anschlagvorsprungs einer Adaptermutter des Adapters den Anschlag und eine Gegenanschlagfläche einer Oberflächenkontur des Halterungsabschnitts oder einer diesem benachbarten Formation des Fahrradrahmens den Gegenanschlag bilden.

Man kann auch in diesem Zusammenhang vorsehen, dass eine dem Halterungsabschnitt des Fahrradrahmens zugewandte Anlagefläche der Adaptermutter des Adapters mit einer Rändelung zur Reibschlussvergrößerung ausgeführt ist.

Weitere Weiterbildungsmöglichkeiten ergeben sich aus den Erfindungs- und Weiterbildungsvorschlägen zum ersten und zum zweiten Aspekt der Erfindung.

Nach einem von dem ersten, zweiten und dritten Aspekt der Erfindung unabhängigen vierten Aspekt schlägt die Erfindung für ein hinteres Schaltwerk der eingangs genannten Art vor, dass der vorzugsweise einteilig als Adapterbolzen ausgeführte Adapter an einem Außengewinde mit einem Innengewinde des ersten Arms des Basiselements verschraubbar (bzw. verschraubt) ist.

Es wird auf den entsprechenden Weiterbildungsvorschlag zum ersten Aspekt der Erfindung verwiesen.

Gemäß einer ersten vorteilhaften Realisierung sind der Adapter sowie der erste Arm und der zweite Arm des Basiselements dafür eingerichtet, durch Festziehen des Adapters den axiale Anlageflächen aufweisende Halterungsabschnitt des Fahrradrahmens zwischen zugeordneten axialen Anlageflächen des ersten Arms und des zweiten Arms oder zwischen zugeordneten axialen Anlageflächen des ersten Arms und eines Bolzenkopfs des Adapters axial einzuspannen. Es kann so eine reibschlüssige rotatorische Fixierung des Basiselements am Fahrradrahmen erreicht werden, ohne dass eine Steckachse oder Schnellspannachse die entsprechenden Spannkräfte ausübt.

Nach einer alternativen zweiten Realisierungsmöglichkeit ist eine Abstandshülse bereitgestellt, die dafür dimensioniert ist, in einen Durchgang des Halterungsabschnitts des Fahrradrahmens aufgenommen zu werden. Der Adapter und die Abstandshülse sowie der erste Arm und der zweite Arm des Basiselements sind dafür eingerichtet, durch Festziehen des Adapters die in den Durchgang des Halterungsabschnitts des Fahrradrahmens aufgenommene Abstandshülse zwischen zugeordneten axialen Anlageflächen des ersten Arms und des zweiten Arms oder zwischen zugeordneten axialen Anlageflächen des ersten Arms und eines Bolzenkopfs des Adapters axial einzuspannen. Wie zum entsprechenden Weiterbildungsvorschlag unter dem ersten Aspekt der Erfindung dargelegt, kommt es dann nicht zu einem Festspannen des Basiselements an seinen beiden Armen am Halterungsabschnitt des Fahrradrahmens, sodass zumindest ein Vorwärts-Drehanschlag für das Basiselements erforderlich ist. Vorteilhaft kann dieser Vorwärts-Drehanschlag mittels einer erfindungsgemäßen Einstelleinrichtung gemäß dem ersten Aspekte der Erfindung bereitgestellt werden.

Weitere Weiterbildungsmöglichkeiten unter dem vierten Aspekt der Erfindung ergeben sich aus den Erfindungs- und Weiterbildungsvorschlägen zu dem ersten, zweiten und dritten Erfindungsaspekt.

Gemäß einem von den zuvor behandelten Erfindungsaspekten unabhängigen fünften Aspekt der Erfindung stellt diese ein hinteres Schaltwerk zur Montage an einem Fahrradrahmen eines Fahrradrahmens bereit, welches ein Basiselement, einen Schwenkmechanismus, ein bewegliches Element und eine Kettenführungsanordnung aufweist. Der Schwenkmechanismus verbindet das Basiselement mit dem beweglichen Element, und die Kettenführungsanordnung ist um eine Drehachse drehbar mit dem beweglichen Element verbunden. Das Basiselement umfasst ein erstes Anschlussende zur Montage an dem Fahrradrahmen oder einem daran montierten Halterungselement, insbesondere ein sogenanntes Schaltauge oder sog. "Hanger", und ein zweites Anschlussende zur Kopplung mit dem Schwenkmechanismus. Eine in Bezug auf eine Hinterradachse koaxiale Montage des hinteren Schaltwerks an dem Fahrradrahmen ist also nicht zwingend vorgesehen.

Erfindungsgemäß zeichnet sich das hintere Schaltwerk nach dem fünften Aspekt dadurch aus, dass das Basiselement ein das erste Anschlussende aufweisendes erstes Teilelement und ein am ersten Teilelement schwenkbar angelenktes, das zweite Anschlussende aufweisendes zweites Teilelement aufweist. Erfindungsgemäß ist ferner eine manuell betätigbare Einstelleinrichtung vorgesehen, mit der das zweite Teilelement relativ zu dem ersten Teilelement des Basiselements mittels wenigstens einer Verstellschraube der Einstelleinrichtung verstellbar ist, um in einem fertig montierten Zustand des hinteren Schaltwerks am Fahrradrahmen eine Kettenspannung einer durch die Kettenführungsanordnung geführten, über ein Ritzel eines Ritzelpakets eines Hinterrads des Fahrrads laufenden Fahrradkette oder/und einen Abstand eines oberen Kettenführungsröllchens der Kettenführungsanordnung von dem Ritzel einzustellen.

Eine für den Monteur oder auch den Radfahrer einfache und komfortable Einstellbarkeit der Kettenspannung bzw. des "Chain Gap" ist auch unabhängig von der in der vorliegenden Erfindungsbeschreibung im Vordergrund stehenden koaxialen Montage des hinteren Schaltwerks an der Hinterradachse von Interesse, wofür der Erfindungsvorschlag nach dem fünften Aspekt eine gute Basis ist.

Mittels der Einstelleinrichtung kann bei gespannter Fahrradkette eine in einer Kettenspannrichtung wirkende Schwenkkraft auf das zweite Teilelement ausübbar sein, die einer auf das zweite Teilelement ausgeübten, auf einer Spannung der Fahrradkette beruhenden Gegen-Schwenkkraft in einer Kettenentspannungsrichtung entgegensetzt ist, wie zum ersten Aspekt der Erfindung dargelegt.

Wie schon erwähnt, bestehen für die Realisierung der Einstelleinrichtung grundsätzlich viele Möglichkeiten. Beispielsweise kann die Einstelleinrichtung an einem vom ersten Teilelement und zweiten Teilelement des Basiselements einen Gewindesockel und am anderen Teilelement des Basiselements einen Anschlag oder eine Drehhalterung oder einen weiteren Gewindesockel aufweist. Die Verstellschraube steht mit dem Gewindesockel bzw. - wenn vorgesehen - mit den beiden, entgegengesetzt orientierte Innengewinde aufweisenden Gewindesockeln in Gewindeeingriff. Im Falle der Drehhalterung ist die Verstellschraube in dieser Drehhalterung des anderen Teilelements verdrehbar und zumindest in Bezug auf Zug in einer Längsrichtung der Verstellschraube abstützbar gehalten. Ist an dem anderen Teilelement der Anschlag vorgesehen, ist die Verstellschraube an diesem Anschlag in Bezug auf Druck abstützbar. Diese Elemente sind jeweils derart angeordnet, dass mittels der Verstellschraube ein Schwenkwinkel des zweiten Teilelements relativ zu dem ersten Teilelement einstellbar ist.

Besonders zweckmäßig kann die Einstelleinrichtung an einem Teilelement einen Gewindesockel und am anderen Teilelement eine Drehhalterung aufweisen. Die Drehhalterung kann von einer einfachen Durchgangsöffnung eines geeigneten Elements des betreffenden Teilelements gebildet sein, durch welche die auf Zug zu belastende Einstellschraube gesteckt ist, wobei ein Schraubenkopf die wirkenden Zugkräfte an diesem die Durchgangsöffnung aufweisenden Element abstützt.

Weitere Weiterbildungsmöglichkeiten unter dem fünften Aspekt der Erfindung ergeben sich aus den Erfindungs- und Weiterbildungsvorschlägen unter dem ersten, zweiten, dritten und vierten Aspekt der Erfindung.

So kann ein Kopf der Verstellschraube, der mit einer Werkzeugeingriffsformation ausgeführt ist, im montierten Zustand des hinteren Schaltwerks am Fahrradrahmen von hinten her zugänglich sein, was ergonomisch vorteilhaft ist.

Bevorzugt ist das erfindungsgemäße Schaltwerk nach dem fünften Aspekt am Fahrradrahmen eines Fahrrads koaxial in Bezug auf eine Hinterradachse montierbar. Hierzu kann das erste Anschlussende des Basiselements einen ersten Arm und einen zweiten Arm aufweisen, die in axialer Richtung voneinander beabstandet angeordnet sind und zur Montage des Schaltwerks dienen, nämlich zur in Bezug auf die Hinterradachse koaxialen Montage an einem zugeordneten Halterungsabschnitt, insbesondere Ausfallende oder Rahmenauge, eines Hinterbaus des Fahrradrahmens. Bevorzugt kommt bei dieser Montage ein Adapter zum Einsatz, der wenigstens ein Gewinde zur Herstellung wenigstens einer Schraubverbindung aufweist.

Auch im Kontext dieser koaxialen Montage des hinteren Schaltwerks wird auf die entsprechenden Erfindungs- und Weiterbildungsvorschläge unter den zuvor behandelten Erfindungsaspekten verwiesen.

Generell wird für die hinteren Schaltwerke nach allen Aspekten der Erfindung im Zusammenhang mit der erfindungsgemäßen bzw. bevorzugten koaxialen Montage weiterbildend vorgeschlagen, dass das Basiselement an seinem ersten Arm mit einer Aussparung ausgeführt ist, durch welche ein axial vorstehenden Abschnitt einer Hinterradachsanordnung eines hinteren Laufrads des Fahrrads nach Entfernung einer Steckachse oder einer Schnellspannachse hindurchführbar ist, um das hintere Laufrad ohne Verschwenken des hinteren Laufwerks relativ zum Fahrradrahmen ausbauen zu können. Dies erleichtert im Kontext aller vorstehend behandelten Erfindungs- und Weiterbildungsvorschläge aller Erfindungsaspekte die Montage und die Demontage des hinteren Schaltwerks erheblich. Dieser Weiterbildungsvorschlag ist besonders nützlich für Ausführungsformen wie das Schaltwerk nach dem vierten Aspekt der Erfindung, bei denen das Basiselement mittels des Adapters am Ausfallende bzw. Rahmenauge (Halterungsabschnitt) festgespannt wird.

Dieser Weiterbildungsvorschlag ist auch für die aus der EP'324 bekannten Lösungen von Interesse. Demgemäß schlägt die Erfindung nach einem von den vorangehenden Erfindungsaspekten unabhängigen sechsten Aspekt für ein hinteres Schaltwerk der eingangs genannten Art vor, dass dessen Basiselement an seinem ersten Arm mit einer Aussparung ausgeführt ist, durch welche ein axial vorstehenden Abschnitt einer Hinterradachsanordnung eines hinteren Laufrads des Fahrrads nach Entfernung einer Steckachse oder einer Schnellspannachse hindurchführbar ist, um das hintere Laufrad ohne Verschwenken des hinteren Laufwerks relativ zum Fahrradrahmen ausbauen zu können.

Die Erfindung stellt ferner auch für eine Nachrüstung von hinteren Schaltwerken gemäß der EP'324 zu erfindungsgemäßen hinteren Schaltwerken geeignete Basiselement (B-Knuckle) gemäß den verschiedenen Erfindungsaspekten bereit, die auch für die Herstellung und Bereitstellung von vornherein der Erfindung entsprechenden Schaltwerken gemäß der vorangehenden Beschreibung und gemäß den angehängten Ansprüchen verwendet werden können. Eine solches Basiselement nach der Erfindung ist mit einem zugeordneten beweglichen Element über einen Schwenkmechanismus verbindbar und weist ein erstes Anschlussende zur in Bezug auf eine Hinterradachse koaxiale Montage an einem Fahrradrahmen und ein zweites Anschlussende zur Kopplung mit dem Schwenkmechanismus auf. Das erste Anschlussende weist einen ersten Arm und einen zweiten Arm auf, die in axialer Richtung voneinander beabstandet angeordnet sind und zur Montage des Basiselements und damit eines das Basiselement umfassenden Schaltwerks an einem zugeordneten Halterungsabschnitt (insbesondere Ausfallende oder Rahmenauge) eines Hinterbaus des Fahrradrahmens mittels eines zugehörigen Adapters eingerichtet sind. Der Adapter weist wenigstens ein Gewinde zur Herstellung wenigstens einer Schraubverbindung auf. In einem definierten vormontierten Zustand und in einem fertig montierten Zustand befindet sich der erste Arm auf einer axialen Innenseite des Halterungsabschnitts und befindet sich der zweite Arm auf einer axialen Außenseite des Halterungsabschnitts. Erfindungsgemäß sind das Basiselement oder/und der Adapter gemäß einem oder mehreren der vorangehend definierten Erfindungs- und Weiterbildungsvorschlägen ausgeführt und am Rahmen montierbar.

Die Erfindung stellt ferner ein Fahrrad bereit, das einen Fahrradrahmen mit einem hinteren Laufrad und eine ein hinteres Schaltwerk aufweisende Kettenschaltung umfasst. Das Fahrrad weist ferner die folgenden Merkmale auf: Das hintere Laufrad ist mit einer eine Hinterradachsanordnung umfassenden Statoranordnung und einer Rotoranordnung ausgeführt. Die Rotoranordnung ist relativ zur Statoranordnung drehbar gelagert oder lagerbar und umfasst eine Laufradnabe mit einem ein Ritzelpaket der Kettenschaltung tragenden Antreiber. Ein Hinterbau des Fahrradrahmens weist einen linken Halterungsabschnitt (insbesondere Ausfallende oder Rahmenauge) und einen rechten Halterungsabschnitt (insbesondere Ausfallende oder Rahmenauge) für eine innere Achse der Hinterradachsanordnung des hinteren Laufrads auf. Bei der inneren Achse kann es sich um eine Steckachse oder eine Schnellspannachse handeln.

Die beiden Halterungsabschnitte weisen einen vorbestimmten definierten Axialabstand längs einer geometrischen Achse der mittels der Halterungsabschnitte an dem Rahmen montierten inneren Achse auf und bilden jeweils ein Gegenlager für eine an der inneren Achse angeordnete, zwischen den Halterungsabschnitten eingespannte und eine Baugruppe der Statoranordnung umfassende Komponentengruppe. Das hintere Schaltwerk ist in Bezug auf die geometrische Achse koaxial an dem Fahrradrahmen montiert und umfasst ein Basiselement, einen Schwenkmechanismus, ein bewegliches Element, und eine Kettenführungsanordnung. Der Schwenkmechanismus verbindet das Basiselement mit dem beweglichen Element, und die Kettenführungsanordnung ist um eine Drehachse drehbar mit dem beweglichen Element verbunden. Das Basiselement umfasst ein erstes Anschlussende zur in Bezug auf die geometrische Achse koaxialen Montage an dem Fahrradrahmen und ein zweites Anschlussende zur Kopplung mit dem Schwenkmechanismus.

Das erste Anschlussende des Basiselements weist einen ersten Arm und einen zweiten Arm auf, die in axialer Richtung voneinander beabstandet angeordnet sind und zur Montage des Schaltwerks an dem zugeordneten rechten Halterungsabschnitt des Hinterbaus mittels eines zugehörigen Adapters eingerichtet sind. Der Adapter weist wenigstens ein Gewinde zur Herstellung einer Schraubverbindung auf. Der erste Arm befindet sich auf einer axialen Innenseite des zugeordneten Halterungsabschnitts und der zweite Arm auf einer axialen Außenseite des zugeordneten Halterungsabschnitts. Erfindungsgemäß ist das hintere Schaltwerk gemäß einem oder mehreren der Erfindungs- und Weiterbildungsvorschlägen wenigstens eines oder mehrerer der vorstehenden behandelten Erfindungsaspekte ausgeführt und am Fahrradrahmen montiert.

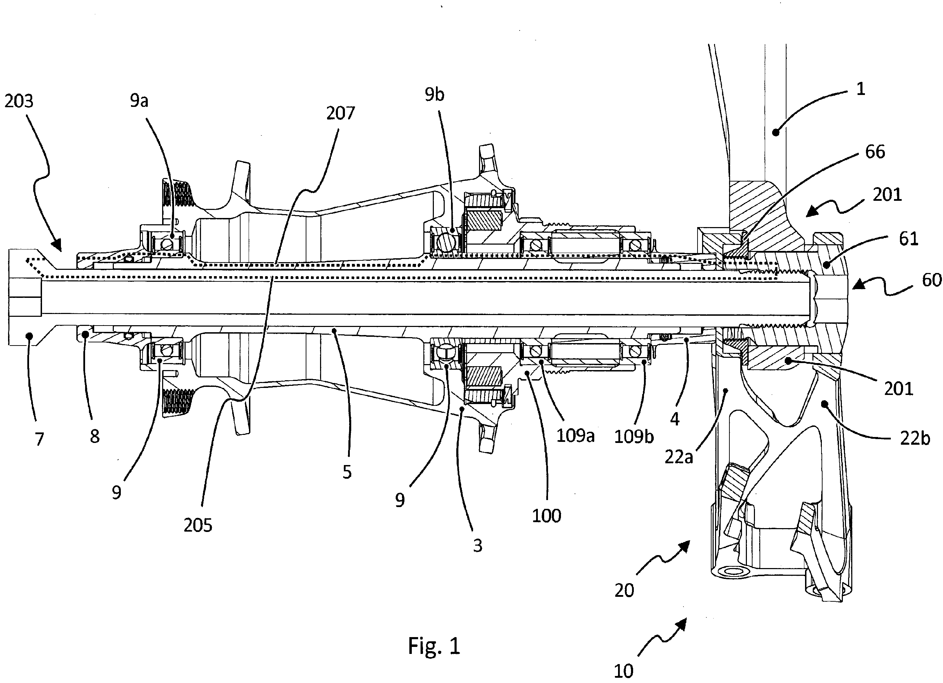

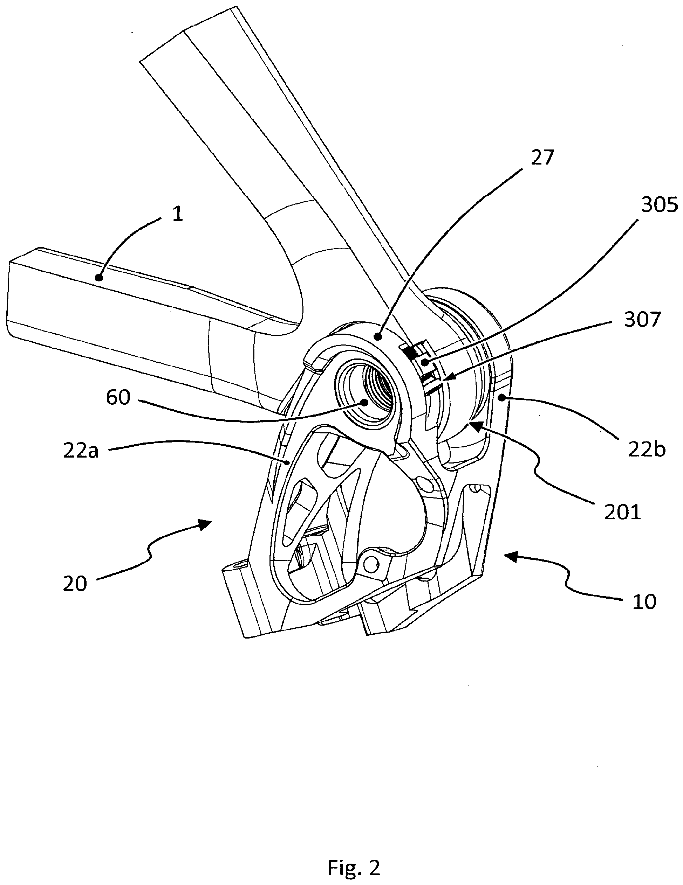

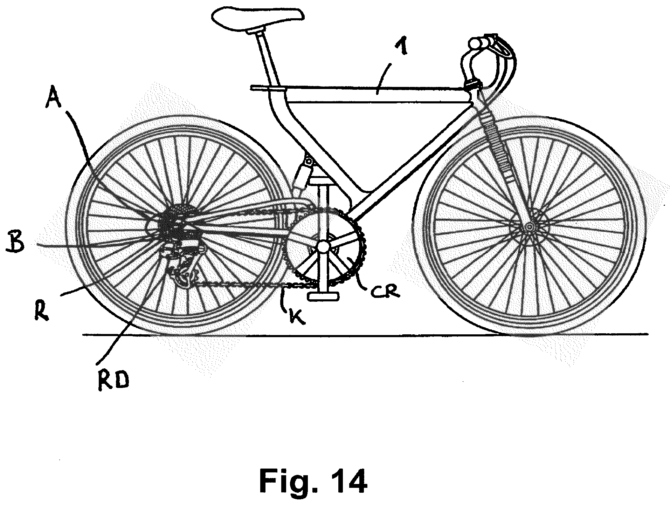

Die Erfindung wird im Folgenden anhand von in den Figuren 2 bis 13 und 24 gezeigten Ausführungsbeispielen der vorliegenden Erfindung sowie anhand der Fig. 1 und den aus der auch als EP'324 angesprochenen Offenlegungsschrift EP 3 388 324 A2 stammenden Figuren 14 bis 23 näher erläutert.

Von den Figuren zeigt
- Fig. 1: eine geschnittene Ansicht von hinten einer an einem Fahrradrahmen montierten Hinterachsanordnung mit einem koaxial angebundenen Basiselement eines hinteren Schaltwerks, im Wesentlichen entsprechend dem Stand der Technik gemäß EP'324;
- Fig. 2: eine perspektivische Innenansicht auf das am Fahrradrahmen montierte Basiselement eines hinteren Schaltwerks gemäß einem ersten erfindungsgemäßen Ausführungsbeispiel;
- Fig. 3: und die zusätzlichen Detailfiguren 3a, 3b und 3c zeigen perspektivische Ansichten eines am Fahrradrahmen montierten Rahmenadapters, des entsprechenden Rahmenauges des Fahrradrahmens und des Adapters mit einem Adapterbolzen und einer Adaptermutter gemäß einem zweiten Ausführungsbeispiel der Erfindung;
- Fig. 4: in einer teilgeschnittenen Innenansicht das am Rahmen montierte Basiselement des hinteren Schaltwerks gemäß dem zweiten Ausführungsbeispiel;
- Fig. 5: in einer Figur 1 entsprechenden Darstellung eine teilgeschnittene Ansicht von hinten der an dem Rahmen montierten Hinterachsanordnung mit dem koaxial montierten Basiselement eines hinteren Schaltwerks gemäß einem dritten Ausführungsbeispiel der Erfindung.
- Fig. 6: in einer perspektivischen Innenansicht das am Fahrradrahmen montierte Basiselement eines hinteren Schaltwerks gemäß einem vierten Ausführungsbeispiel der Erfindung;
- Fig. 7: das am Rahmen montierte Basiselement der Figur 6 in einer geschnittenen Ansicht von hinten;
- Fig. 8: in einer Innenansicht das am Fahrradrahmen montierte Basiselement gemäß einer Ausführungsvariante zu der Ausführungsform der Figuren 6 und 7;
- Fig. 9: in einer teilgeschnittenen Innenansicht das am Fahrradrahmen montierte Basiselement gemäß der Ausführungsvariante der Fig. 8;
- Fig. 10: eine weitere Ausführungsvariante zu der Ausführungsform der Figuren 6 und 7 in einer geschnittenen Ansicht entsprechend Figur 7;
- Fig. 11: in einer perspektivischen Außenansicht ein an einem Fahrradrahmen montiertes, zwei relativ zueinander schwenkbare Teilelemente aufweisendes Basiselement eines hinteren Schaltwerks gemäß einem fünften Ausführungsbeispiel der Erfindung;
- Fig. 12: das Basiselement des fünften Ausführungsbeispiel in einer perspektivischen Ansicht entsprechend Fig. 11 mit gegenüber Fig. 11 etwas vergrößertem Schwenkwinkel der beiden Teilelemente relativ zu einander; und
- Fig. 13: das am Rahmen montierte Basiselement des fünften Ausführungsbeispiels in einer Innenansicht.
Ferner zeigt
- Fig. 14: ein Fahrrad mit einem herkömmlichen Schaltwerk gemäß dem Stand der Technik entsprechend Fig. 13 der EP'324;
- Fig. 15: eine perspektivische Außenansicht eines koaxial zur Hinterradachse zu montierenden Schaltwerks entsprechend Fig. 1 der EP'324, welches als Ausgangspunkt für die Beschreibung der erfindungsgemäßen Ausführungsbeispiele dient;
- Fig. 16: eine Schnittdarstellung von Fig. 1 entlang der Achse A ohne Nabenanordnung entsprechend Fig. 2 der EP'324;
- Fig. 17: eine Seitenansicht des Schaltwerks der Fig. 1 entsprechend Fig. 3 der EP'324;
- Fig. 18: eine perspektivische Innenansicht des Basiselements am Rahmen montiert entsprechend Fig. 4 der EP'324;
- Fig. 19: einen perspektivischer Teilschnitt des Basiselements aus Fig. 4 mit Adapter entsprechend Fig. 5 der EP'324;
- Fig. 20: eine vergrößerte Ansicht von Fig. 19 ohne Nabenanordnung entsprechend Fig. 6 der EP'324;
- Fig. 21: eine Vollschnittdarstellung der Anordnung aus Fig. 20 entsprechend Fig. 7 der EP'324;
- Fig. 22: eine Explosionsdarstellung des Basiselements und des Adapters entsprechend Fig. 8 der EP'324; und
- Fig. 23: in Teilfigur 23a eine perspektivische Außenansicht des Basiselements entsprechend Fig. 9a der EP'324 und in Teilfigur Fig. 23b eine perspektivische Innenansicht des Basiselements entsprechend Fig.9b der EP'324.
Schließlich zeigt
- Fig. 24: ein erfindungsgemäßes Fahrrad mit einem erfindungsgemäßen hinteren Schaltwerk als exemplarisches Ausführungsbeispiel in einer schematischen Darstellung.

Die in den Figuren 2 bis 13 und 24 dargestellten exemplarischen Ausführungsformen der Erfindung unter ihren verschiedenen Aspekten werden im Folgenden auf Grundlage der bekannten Lösung gemäß der Druckschrift EP'324 beschrieben. Dabei werden für analoge Element die gleichen Bezugszeichen wie in den Figuren 14 bis 23 und den weiteren Figuren der EP'324 und der zugehörigen Beschreibung unten und in der EP'324 verwendet. Gegenüber der EP'324 neu eingeführte numerische Bezugszeichen haben einen Zahlenwert größer als 200. Die Beschreibung der erfindungsgemäßen Ausführungsformen konzentriert sich auf die Unterschiede im Sinne von Änderungen und Ergänzungen gegenüber den bekannten Lösungen der Druckschrift EP'324, um Wiederholung von schon Bekanntem zu vermeiden und die Beschreibung auf die erfindungsgemäßen Neuerungen zu konzentrieren. Zur grundsätzlichen Konstruktion des erfindungsgemäßen hinteren Schaltwerks und dessen Montage am Fahrradrahmen und weiteren Einzelheiten und Ausführungsmöglichkeiten wird ausdrücklich auf die Figuren 14 bis 23 und die zugehörige Beschreibung unten sowie auf den gesamten Inhalt der EP'324 verwiesen.

Fig. 1 zeigt zunächst im Wesentlichen den Stand der Technik bezüglich der koaxialen Anbindung eines hinteren Fahrradschaltwerks 10 an ein rechtes Rahmenauge 201, wie er ähnlich in der EP'324 offenbart ist.

Man erkennt in Fig. 1, dass der zeichnungsbezogen linke, erste Arm 22a des Basiselements (B-Knuckle) 20 zwischen der rechten Nabenendkappe 4 und dem Adapterbolzen 61 durch axiale Kraftwirkung reibschlüssig eingespannt ist und damit (zusätzlich zum oben schon angesprochenen und unten detaillierter beschriebenen Anschlag des Basiselements 20 an den rotatorischen Anschlagsvorsprüngen 68a, 68b der Adaptermutter 66) rotatorisch fixiert wird, sobald die Steckachse 7 im Adapterbolzen 61 festgeschraubt und damit ein in der Zeichnung durch eine punktierte Linie repräsentierter axialer Kraftfluss in der Hinterachse hergestellt ist. Dieser axiale Kraftfluss wird bei 203 durch das nicht dargestellte linke Rahmenauge geschlossen. Der Abschnitt 205 der punktierten Linie repräsentiert die Zugspannung in der Steckachse und der Abschnitt 207 der punktierten Linie repräsentiert die Druckspannung in der Nabenachse 5, an der die Nabenhülse 3 drehbar gelagert ist. Die Nabenanordnung umfasst neben der rechten Nabenendkappe 4, der Nabenachse 5 und der Nabenhülse 3 auch die linke Nabenendkappe 8, die Nabenlagerung 9 mit als Wälzlager ausgebildeten Nabenlagern 9a, 9b. Der Antreiber 100 ist mittels Antreiberlagern 109a, 109b an der Nabenachse 5 unabhängig von der Nabenhülse 3 drehbar gelagert. Der Druckspannungs-Kraftfluss 107 verläuft ohne Druckbelastung der rotierbaren Komponenten durch die die Steckachse 7 aufnehmenden Nabenachse 5.

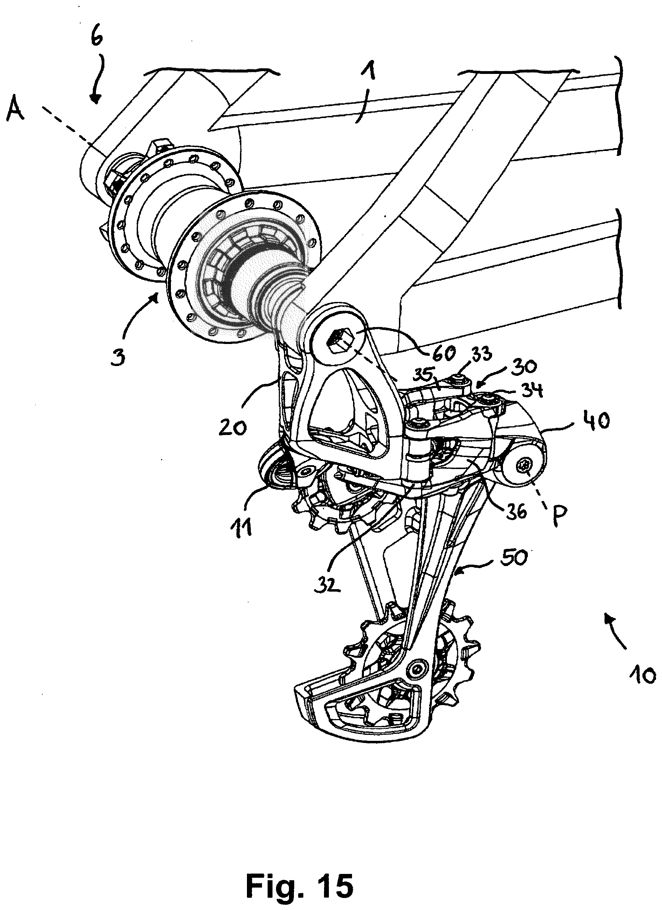

Auf diese Weise, also auf Grundlage der Klemmung des ersten Arms 22a des Basiselements 20 zwischen dem Adapterbolzen 61 und der Nabenendkappe 4 in Folge des Anziehens der Steckachse 7, wird somit das Basiselement (B-Knuckle) 20 und damit das Fahrradschaltwerk 10 reibschlüssig rotatorisch in Bezug auf die Hinterradachse fixiert. Das Schaltwerk 10 kann dann nur noch durch relativ starke Krafteinwirkung, wie sie während der Fahrt beispielsweise bei einer Kollision mit einem Hindernis wie z.B. mit einem Ast auftreten kann, im Uhrzeigersinn um die Hinterradachse verschwenkt werden (Uhrzeigersinn bezogen auf die seitliche Betrachtung gemäß den Fig. 14 und 15). Durch diese Eigenschaft der in der EP'324 beschriebenen koaxialen Schaltwerksanbindung kann somit die Energie einer solchen Schaltwerkskollision über einen relativ großen Weg, und damit anhand relativ kleiner Kräfte aufgenommen werden, über die reibschlüssige Klemmung des Basiselements 20 zwischen der rechten Nabenendkappe 4 und dem Adapterbolzen 61 in Wärme umgewandelt und damit typischerweise ohne Beschädigung des Schaltwerks 10 abgeleitet werden. Der rechte, zweite Arm 22b des Basiselements 20 ist an dem Bolzenkopf 62 des Adapterbolzens 61 zentriert, aber ohne wesentliche Gegenkräfte relativ zu diesem verschwenkbar.

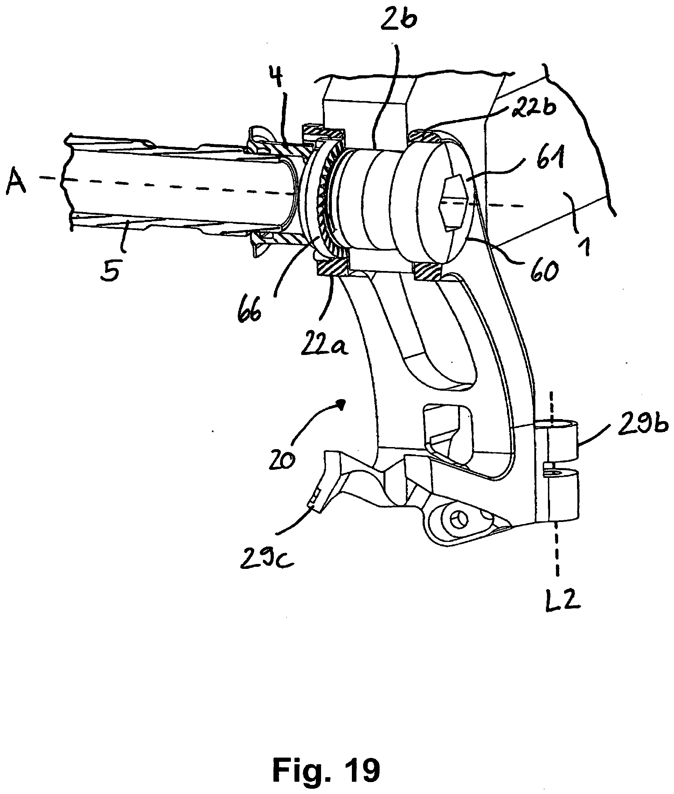

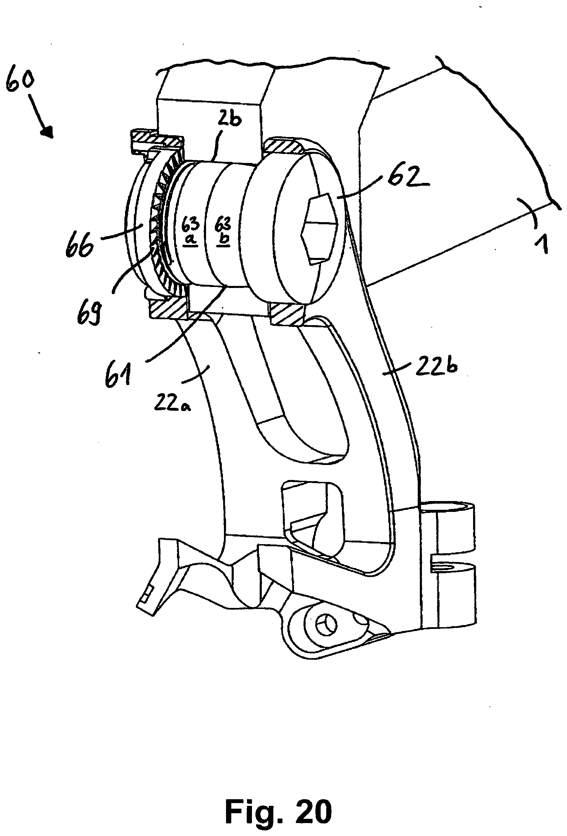

Angemerkt sei noch, dass ausweislich der Darstellung in der Fig. 1 der innere erste Arm 22a an der Nabenendkappe 4 oder an der Steckachse 7 zentriert ist, wohingegen nach der bekannten Ausführungsform der vorstehend angesprochenen Figuren der EP'324 der innere erste Arm 22a an der Adaptermutter 66 zentriert ist. Es wird auf Fig. 19 und 20 und die zugehörige Beschreibung unten verwiesen. Es handelt sich bei der Zentrierung an der Nabenendkappe 4 oder an der Steckachse 7 oder an der Adaptermutter 66 um technisch gleichwertige Möglichkeiten zur Zentrierung des ersten Arms, die wahlweise zur Anwendung kommen können.

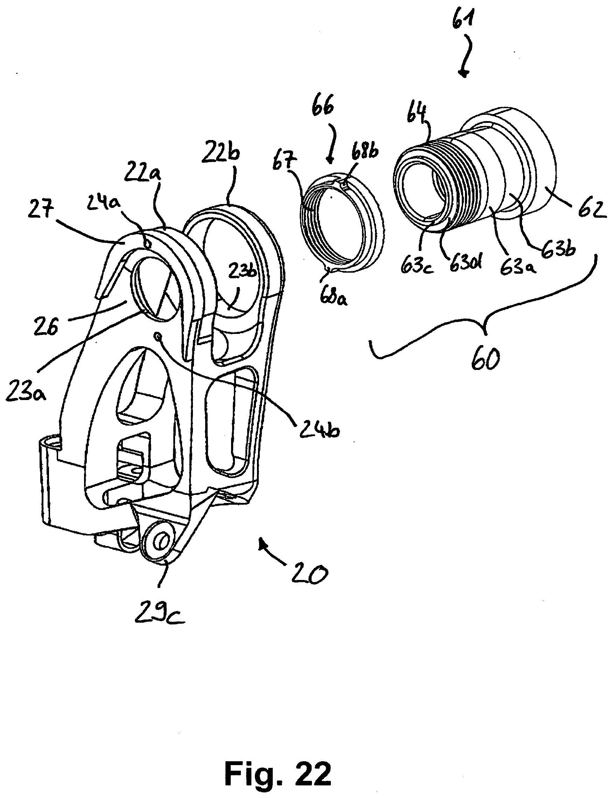

Fig. 2 zeigt eine erste erfindungsgemäße Ausführungsform einer koaxialen Schaltwerksanbindung an einen Fahrrad-Hinterbau. Das in Fig. 2 gezeigte Basiselement (B-Knuckle) 20 unterscheidet sich zwar von den in der vorgenannten EP'324 gezeigten Lösungen in einigen Details, beispielsweise in Bezug auf die konkrete Ausführung der beiden Arme 22a und 22b des Basiselements 20. Diese Unterschiede sind jedoch nicht relevant für die erste Ausführungsform gemäß Fig. 2. Dies bedeutet, dass sich die in der Ausführungsform gemäß Fig. 2 realisierten Lösungsmerkmale der vorliegenden Erfindung ohne Einschränkungen auch auf die in der EP'324 gezeigten hinteren Schaltwerke bzw. deren Basiselemente (vgl. beispielsweise Fig. 22) bzw. auf die in der EP'324 offenbarten koaxialen Schaltwerksanbindungen, die bezüglich der Klemmung des Basiselements 20 zwischen der Nabenendkappe 4 und dem Adapterbolzen 61 im Wesentlichen mit Fig. 1 übereinstimmen, anwenden lässt.

Der wesentliche Unterschied zwischen der in Fig. 2 gezeigten Ausführungsform und der aus der EP'324 vorbekannten koaxialen Schaltwerksanbindung besteht darin, dass die Adaptermutter 66 bei der Ausführungsform gemäß Fig. 2 anstelle der rotatorischen Anschlagvorsprünge 68a, 68b gemäß Fig. 22 einen Gewindesockel 305 aufweist, in welchen eine im Folgenden auch als "B-Schaube" bezeichnete Verstellschraube 307 einschraubbar bzw. eingeschraubt ist. Wie man in Fig. 2 erkennt, schlägt ein am zeichnungsbezogen linken, ersten Arm 22a des Basiselements 20 angeordneter Anschlag des Basiselements am dem Anschlag zugewandten Ende der Verstellschraube 307 an.

Details der den Gewindesockels 305, die Verstellschraube 307 und den Anschlag des Basiselements 20 umfassenden Einstelleinrichtung nach der Erfindung in der konkreten Realisierung gemäß Fig. 2 sind in dieser Figur nicht vollständig zu erkennen. Es wird deshalb auf die entsprechende Realisierung in den Figuren 3 (mit den zusätzlichen Detailfiguren 3a, 3b und 3c) und 4 verwiesen, die einen entsprechenden Gewindesockel 405, eine entsprechende Verstellschraube 407 und einen entsprechenden Anschlag 409 am ersten Arm 22a des Basiselements 20 aufweisen. Der Adapter 60 dieser Figuren des zweiten Ausführungsbeispiels unterscheidet sich vom Ausführungsbeispiel der Fig. 2 nur in einer nichtrotationssymmetrischen Ausführung der Adaptermutter 66 mit einem unten näher beschriebenen Anschlagvorsprung 421 zur formschlüssigen Abstützung gegen Verdrehung an einer zugeordneten Anschlagfläche 422 des Rahmens 1.

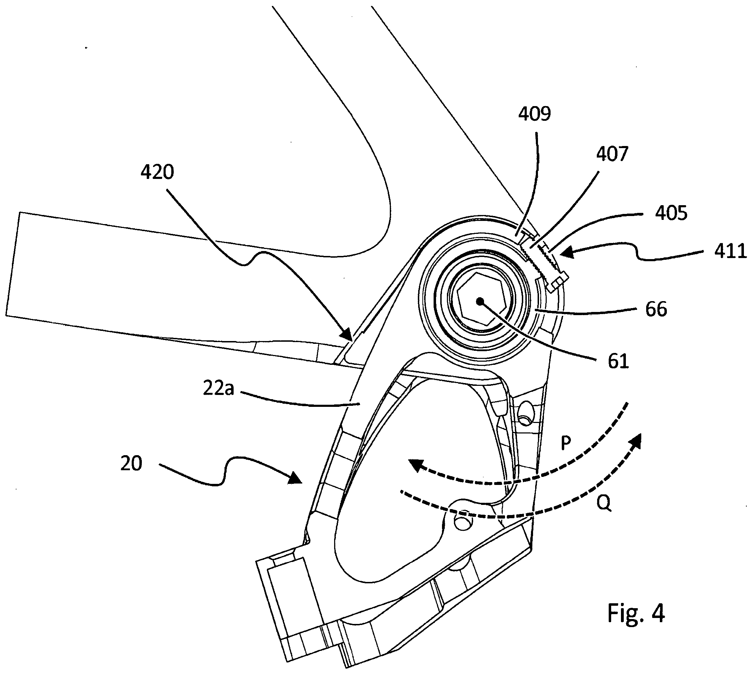

Wie zu erkennen, erstreckt sich der Gewindesockel 405 nach radial außen in eine Öffnung oder Aussparung 411 (vgl. Fig. 4) in einem sich um die Adaptermutter 66 in Umfangsrichtung erstreckenden Abschnitt des ersten Arms 22a. Eine diese Öffnung oder Aussparung 411 in Umfangsrichtung begrenzende Fläche des Basiselements 20 bildet den mit der Verstellschraube 407 zusammenwirkenden Anschlag 409.

Dies bedeutet, dass die Anschlagsposition zwischen der Adaptermutter 66 und dem Basiselement (B-Knuckle) 20, die bei der bekannten, koaxialen Schaltwerksanbindung gemäß der EP'324 durch Zusammenwirken der rotatorischen Anschlagvorsprünge 68a/b der Adaptermutter 66 mit den am Basiselement angeordneten Gegenanschlägen 24a/b gebildet wird, und die dort nach dem Festziehen des Rahmenadapters unveränderbar ist (vgl. Fig. 19 bis 22), bei der erfindungsgemäßen Ausführungsform gemäß Fig. 2 und entsprechend bei der erfindungsgemäßen Ausführungsform gemäß Fig. 3 verstellbar ausgeführt ist.

Mit anderen Worten kann die rotatorische Winkelstellung des Basiselements 20 und damit des Schaltwerks, genauer gesagt der rotatorische Vorn- oder Vorwärtsanschlag des Schaltwerks (im Gegenuhrzeigersinn gemäß den Fig. 14 und 15) bei der Ausführungsform gemäß Fig. 2 variabel eingestellt werden, auch dann noch, wenn der Adapterbolzen 61 und die Adaptermutter 61 bereits durch Reibschluss rotatorisch fest mit dem Rahmenauge 201 verbunden sind.

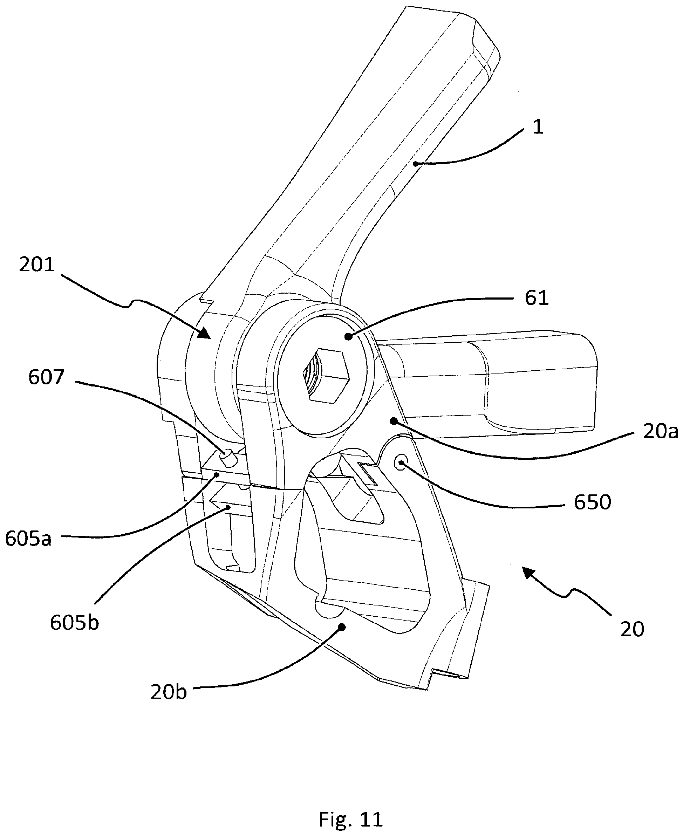

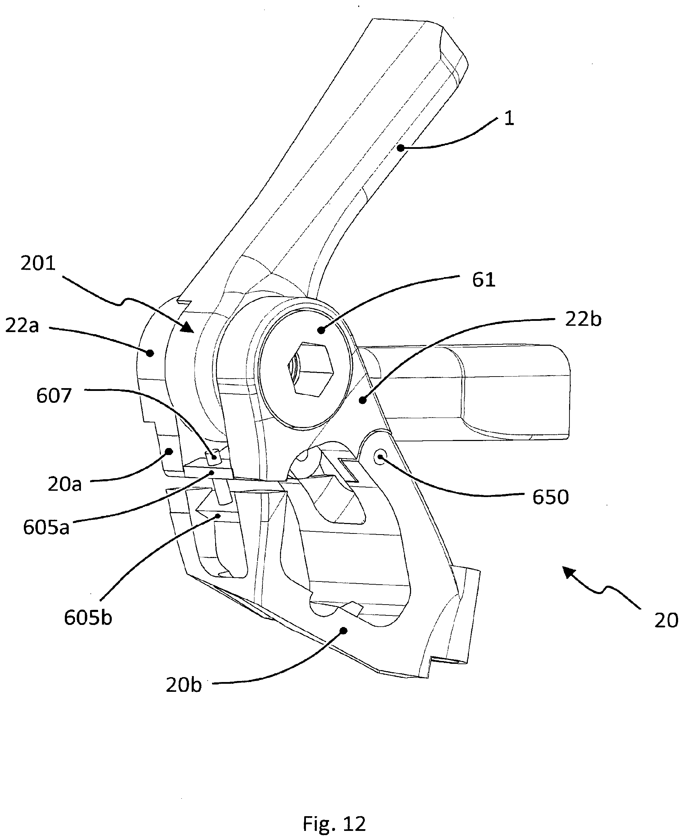

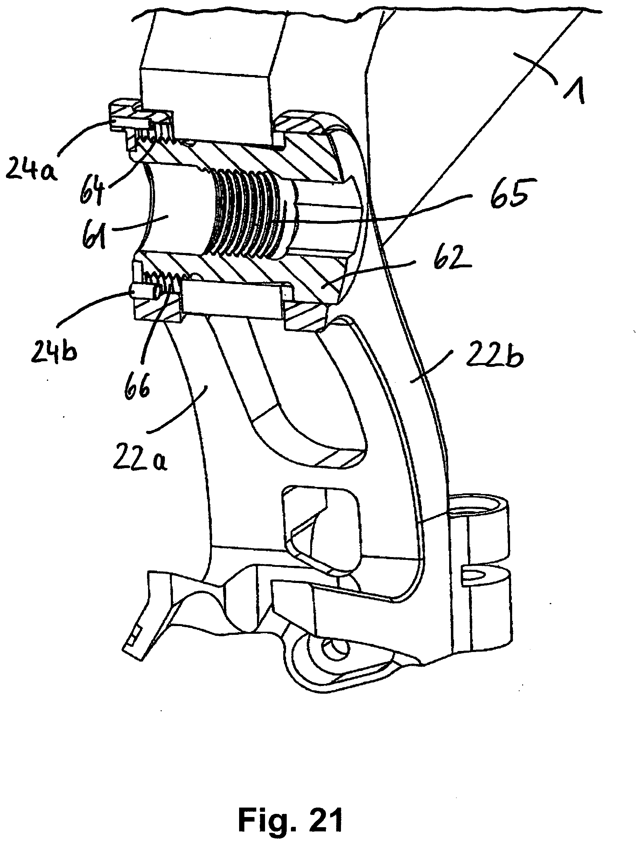

Auf diese Weise kann die Kettenspannung bzw. der Abstand des oberen Kettenführungsröllchens von einem bestimmten Referenzritzel des Ritzelpakets (sog. "Chain Gap", vgl. auch Fig. 11 und 12 der EP'324, wobei das Referenzritzel nicht notwendigerweise das kleinste oder das größte Ritzel des Ritzelpakets ist) bei Bedarf jederzeit durch Verstellung der gemäß Fig. 2 im Gewindesockel 305 der Adaptermutter 66 angeordneten Verstellschraube (B-Schraube) 307 angepasst bzw. feineingestellt werden, ohne dass hierzu die rotatorische Fixierung des Adapterbolzens 61 im Rahmenauge 201 und damit die rotatorische Fixierung der Adaptermutter 66 gelöst werden müsste. Es braucht nur der Schraubeingriff der Steckachse 7 in das Innengewinde 65 (vgl. Fig. 21) gelöst oder hinreichend gelockert zu werden, um die Einklemmung des ersten Arms 22a zwischen der Nabenendkappe 4 und dem Adapterbolzen 61 zu lösen oder hinreichend zu lockern. Hiernach kann das Basiselement 20 vermittels der von dem Gewindesockel 305, der Einstellschraube 307 und dem dem Anschlag 409 entsprechenden Anschlag des Basiselements 20 gebildeten Einstelleinrichtung auf einfache Weise, nämlich durch entsprechende Betätigung der Einstellschraube, in der Kettenspannschwenkrichtung (im Uhrzeigersinn gemäß Fig. 14 und Fig. 15) oder - unter Mitwirkung der Kettenspannung - in der Kettenentspannungsschenkrichtung (entgegen dem Uhrzeigersinn gemäß Fig. 14 und Fig. 15) verschwenkt werden.

Um die Kette zu spannen, ist die Einstellschraube 307 mittels eines von hinten her in eine Eingriffsöffnung eines Schraubenkopfes (vergleiche Schraubenkopf 413 in Fig. 3a) einzuführenden Werkzeugs (etwa ein Imbus-Schlüssel oder dergleichen) in den Gewindesockel 305 in Richtung zum Anschlag 409 des Basiselements 20 hinein zu drehen. Um die Kette zu entspannen, ist die Einstellschraube 307 mittels des Werkzeugs aus dem Gewindesockel 305 heraus zu drehen.

Hierdurch lässt sich also der die Kette und das Schaltwerk umfassende Antriebsstrang, insbesondere hinsichtlich "Chain Gap" und Kettenspannung, beispielsweise auch auf gefederte Fahrradrahmen mit spezieller Hinterbau-Kinematik anpassen, bei denen ein relativ großer sog. "Chainstay Growth" auftritt, sich also der Abstand zwischen Tretlagerwelle und Hinterachse beim Einfedern des Hinterbaus signifikant verändert. Auch andere Faktoren, wie eine bei der Einstellung des Antriebsstrangs etwa berücksichtigte Einfederungsposition (sog. sag-Position, Einsenktiefe oder Negativfederweg der Federung, verursacht durch das statische Fahrergewicht), oder der mit der Zeit auftretende Kettenverschleiß und eine damit verbundenen Längung der Kette können dank der in Fig. 2 dargestellten Ausführungsform mit der Verstellschraube (B-Schraube) 407 jederzeit auf einfache Weise nachgestellt bzw. ausgeglichen werden.

Eine weitere Ausführungsform einer koaxialen Schaltwerksanbindung nach der vorliegenden Erfindung ist in Fig. 3 bis 4 dargestellt. Es werden in der Beschreibung dieses Ausführungsbeispiels für analoge oder identische Elemente die gleichen Bezugszeichen wie bei der vorangehenden Beschreibung des ersten Ausführungsbeispiels verwendet, wobei allerdings die numerischen Werte von Bezugszeichen zu sich auf noch nicht aus der EP'234 bekannte Lösungsmerkmalen der Erfindung beziehenden Elementen (Bezugszeichen mit numerischen Werten größer 300) um 100 vermehrt sind. Analog sind auch bei den folgenden Beschreibungsteilen zu weiteren Ausführungsbeispielen entsprechende Bezugszeichen um jeweils 100 vermehrt, und es werden dabei auch Bezugszeichen aus der EP'324 weiter verwendet, teilweise mit ergänztem Oberstrich bzw. ergänzten Oberstrichen zur Kennzeichnung der jeweiligen Ausführungsform.

Die Ausführungsform der Fig. 3 und 4 weist wie die erste Ausführungsform der Fig. 2 die den Gewindesockel 405, die Verstellschraube 407 und den Anschlag 409 am Basiselement 20 umfassende, manuell betätigbare Einstelleinrichtung auf, die zur Einstellung bzw. Feineinstellung bzw. Nachjustage der Kettenspannung bzw. des "Chain Gap" dient. Die Verstellschraube (B-Schraube) 407 ist (wie bei der Ausführungsform gemäß Fig. 2) auch bei der Ausführungsform nach Fig. 3 bis 4 wieder in dem Gewindesockel 405 aufgenommen, welcher vorzugsweise einstückig mit der Adaptermutter 66 ausgebildet ist. Wie schon bei der Ausführungsform gemäß Fig. 2 beschrieben und dort dargestellt, kommt das Basiselement 20 auch hier wieder am dem Schraubenkopf 413 entgegengesetzten Ende der Verstellschraube 407 zum Anschlag (s. Fig. 4), wodurch sich die rotatorische Schwenkposition des Basiselements 20 und damit des Schaltwerks 10 relativ zur Adaptermutter 66 und somit relativ zum Rahmenauge 201 jederzeit stufenlos variieren lässt. Dies dient, wie vorstehend bereits bei der Ausführungsform gemäß Fig. 2 beschrieben, insbesondere der Einstellung des korrekten Chain Gap am Schaltwerk, und bei Bedarf ebenso zur etwaigen späteren Feinjustierung der "Chain Gap" und Kettenspannung.

Den vorstehenden Ausführungen im Kontext der Fig. 2 braucht nichts hinzugefügt werden. Es sollte aber noch erwähnt werden, dass eine funktionsmäßig im Wesentlichen identische und strukturell sehr ähnliche Verstelleinrichtung auch durch einen Gewindesockel mit einer Verstellschraube am Bolzenkopf 62 des Adapterbolzens 61 und einen entsprechenden Anschlag des zweiten Arms 22b des Basiselements realisiert sein könnte, in Abweichung von Fig. 2 und von den Figuren 3 und 4. Bevorzugt ist aber die gemäß diesen Figuren realisierte Anordnung der Einstelleinrichtung innenseitig des Rahmenauges 201.

Bei der aus der EP'324 bekannten koaxialen Schaltwerksanbindung erfolgt, wie vorstehend bereits beschrieben, die rotatorische Fixierung der Adaptermutter 66 gegenüber dem Rahmenauge 201 über eine stirnseitige Rändelung der Adaptermutter 66, vgl. z.B. Fig. 19 und 20. Genau so kann auch die erste Ausführungsform gemäß Fig. 2 realisiert sein

Diese Art der rotatorischen Fixierung der Adaptermutter 66 gegenüber dem Rahmenauge 201 ist jedoch, beispielsweise aus Kostengründen oder aus Gründen unterschiedlicher Oberflächenbeschaffenheiten der Adaptermutter-Anlagefläche am Rahmenauge bei unterschiedlichen Rahmenausführungen oder Rahmenmaterialien, oder auch im Fall etwaiger extremer Belastungen, eine nicht in allen Fällen zu bevorzugende Lösung.

Aus diesem Grund ist bei der Ausführungsform gemäß Fig. 3 bis 4 vorgesehen, dass der Adapter 66 am Rahmen in einer vordefinierten Drehstellung formschlüssig festlegbar ist. Die kann vorteilhaft durch wenigstens einen adapterseitigen Drehanschlag und wenigstens einen rahmenseitigen Drehanschlag erfolgen, die insbesondere als Vorwärts-Anschläge wirken.

Gemäß dem konkreten Ausführungsbeispiel der Fig. 3 und 4 ist die Adaptermutter 66 zusätzlich bzw. alternativ zu ihrer Rändelung, wie diese bei der Ausführungsform gemäß Fig. 1 und 2 bzw. beim Stand der Technik gemäß EP'324 vorliegt, mit einem Anschlagvorsprung 421 ausgeführt, welcher mit einer als Anschlag dienenden Anschlagfläche 420 formschlüssig an einer korrespondierenden, als Gegenanschlag dienenden Gegenanschlagfläche 422 (vgl. Fig. 3c) am Hinterbau bzw. Rahmenauge 201 zur Anlage bringbar ist. Durch diesen Anschlag der genannten Elemente aneinander erfolgt die erfindungsgemäße rotatorische Festlegung der Adaptermutter 66 am Rahmen 1. Die Adaptermutter 61 kann sich aufgrund dieses Anschlags nicht in der in Fig. 4 durch den Pfeil P repräsentierten Drehrichtung relativ zum Rahmen drehen, wodurch in Folge des Anschlags der Verstellschraube (B-Schraube) 407 an dem Anschlag 409 der ersten Arms 22a des Basiselements 20 das Basiselement nicht in dieser einer Kettenentspannungsrichtung entsprechenden Schwenkrichtung P verschwenken kann. In der Darstellung der Fig. 14 unten entspricht diese Schwenkrichtung einem Verschwenken des Basiselements (P-Knuckle) relativ zum Fahrradrahmen 1 entgegen dem Uhrzeigersinn.

Zur besseren Erkennbarkeit ist die Adaptermutter 66 gemäß dieser Ausführungsform in den Figuren 3a und 3b nochmals separat dargestellt. Aus demselben Grund zeigt Fig. 3c nochmals das rechte Rahmenauge 201 gemäß Fig. 3 ohne den darin eingesetzten, aus dem Adapterbolzen 61 und der Adaptermutter 66 bestehenden Rahmenadapter 60. Entsprechend ist auch die die am Rahmenauge 201 angeordnete Anschlagfläche 422 für den Anschlagvorsprung 421 der Adaptermutter 66 in Fig. 3c deutlich erkennbar.

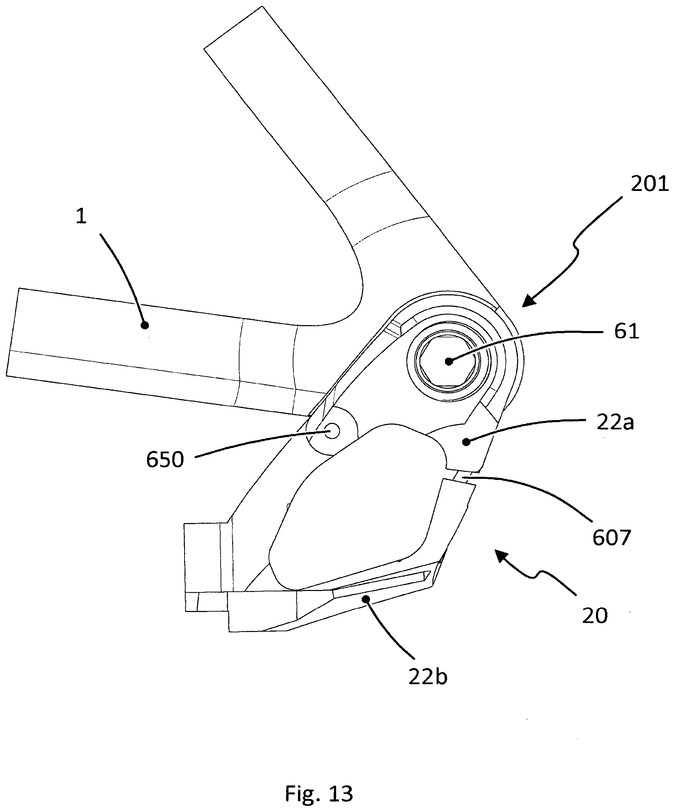

Bei der Ausführungsform gemäß Fig. 3 bis 4 ist somit die Adaptermutter 66 nach der Montage des Rahmenadapters 60 rotatorisch unveränderlich per Formschluss gegenüber dem Rahmenauge 201 fixiert, was die Rotationsrichtung im Gegenuhrzeigersinn (gemäß Fig. 13 und 1) angeht. Dies ist die Dreh- oder Schwenkrichtung des Basiselements 20 relativ zu dem Rahmenauge 201, die im Sinne einer Entspannung der durch die Kettenführungsanordnung 50 geführten Kette der Kettenschaltung wirken würde.

Eine Einstellung der Rotationsposition des Basiselements 20 und damit des Schaltwerks 10 relativ zum Rahmenauge 201 bzw. zum Fahrrad-Hinterbau (die weiter oben diskutierte Einstellung des Chain Gap und der Kettenspannung) kann bei der Ausführungsform gemäß Fig. 3 bis 4 somit nicht mehr wie beim Stand der Technik gemäß EP'324 dadurch erfolgen, dass die Adaptermutter 66 in die gewünschte Rotationsposition gedreht und in dieser Position mittels des Adapterbolzens 61 festgezogen und am Rahmenauge 201 reibschlüssig bzw. vermittels der angesprochenen Rändelung der Adaptermutter 66 gegen Verdrehen festgelegt wird.

Aus diesem Grund weist die Ausführungsform gemäß Fig. 3 bis 4 die Einstellmöglichkeit über die wenigstens eine Einstellschraube aufweisende Einstelleinrichtung auf, die ohne Beschränkung der Allgemeinheit so wie nach der Fig. 2 mit einer Einstellschraube 407, dem Gewindesockel 405 und dem Anschlag 409 am Basiselement 20 ausgeführt sein kann.

Abweichend hiervon kann bei der Ausführungsform gemäß Fig. 2 die Einstellung der Rotationsposition des Basiselements 20 und damit des Schaltwerks 10 relativ zum Rahmenauge 201 wahlweise anhand der Verstellschraube (B-Schraube) 307 oder durch Lösen oder Lockern der Einspannung des ersten Arms 22a des Basiselements 20, Lösen des Rahmenadapters 60, entsprechende Verdrehung der Adaptermutter 66, anschließendes Wieder-Festziehen des Rahmenadapters 60 und erneute Einspannung des ersten Arms 22a durch Festziehen der Steckachse 7 erfolgen.

Eine Verdrehung der Adaptermutter 61 aus der in Fig. 4 gezeigten Stellung in einer der Kettenentspannungsrichtung (Pfeil P) entgegengesetzten Drehrichtung, die in Fig. 4 durch den Pfeil Q repräsentiert ist, wird hingegen durch die beschriebene Ausgestaltung der Adaptermutter 61 mit dem Anschlagvorsprung 421 nicht formschlüssig blockiert. Einer solchen Verdrehung wirken nur reibschlüssige Gegenkräfte bzw. auf der etwaigen, angesprochenen Rändelung der Adaptermutter 66 beruhende Gegenkräfte entgegen. Somit kann auch das Basiselement 20 im Prinzip relativ zum Rahmen 1 in dieser einer Kettenspannrichtung entsprechenden Schwenkrichtung Q verschwenken, wenn entsprechende Schwenkkräfte etwa aufgrund eines Aufpralls des Schaltwerks gegen einen Ast oder dergleichen während des Fahrbetriebs auftreten, die solche Gegenkräfte überwinden. In der Darstellung der Fig. 14 unten entspricht diese Schwenkrichtung einem Verschwenken des Basiselements (P-Knuckle) relativ zum Fahrradrahmen 1 im Uhrzeigersinn.

Fig. 5 zeigt eine weitere Ausführungsform für eine koaxiale Schaltwerksanbindung nach der Erfindung. Fig. 5 stimmt vollständig mit Fig. 1 überein mit der Ausnahme, dass bei der Ausführungsform gemäß Fig. 5 die rechte Nabenendkappe 4 direkt an der zeichnungsbezogen linken Stirnfläche des Adapterbolzens 61 zur Anlage kommt, und so den axialen Kraftfluss der Achse ohne Einbeziehung des Basiselements (B-Knuckle) 20 bzw. dessen ersten Arms 22a' schließt. Der Adapterbolzen 61 bildet also direkt den Axialanschlag für die Nabenendkappe 4.

Wie oben hinsichtlich Fig. 1 beschrieben, ist hingegen bei der der koaxialen Schaltwerksanbindung gemäß Fig. 1, welche diesbezüglich mit dem Stand der Technik aus der EP'324 übereinstimmt, der zeichnungsbezogen linke, erste Arm 22a des Basiselements 20 zwischen der rechter Nabenendkappe 4 und dem Adapterbolzen 61 durch axiale Kraftwirkung reibschlüssig eingespannt und damit rotatorisch fixiert, sobald die Steckachse 7 im Adapterbolzen 61 festgeschraubt und somit der axiale Kraftfluss über die Nabenachse (Hinterachse) 5 und insgesamt ein geschlossener Kraftfluss hergestellt ist.

Im Unterschied hierzu kann das Basiselement 20 mit seinem an der Nabenendkappe 4 zentrierten inneren ersten Arm 22a' und damit das Schaltwerk 10 bei der Ausführungsform gemäß Fig. 5 auch dann noch zunächst frei rotatorisch um die Hinterradachse geschwenkt werden, wenn die Steckachse 7 eingesetzt und im Adapterbolzen 61 festgeschraubt ist.

Dies bedeutet, dass das B-Knuckle und damit das Schaltwerk bei der Ausführungsform gemäß Fig. 5 auf andere Weise rotatorisch fixiert werden muss, zumindest was die Schwenkrichtung im Gegenuhrzeigersinn gemäß Fig. 14 und 15 betrifft.

Hierzu wird bei der Ausführungsform gemäß Fig. 5 ein vorzugsweise verstellbarer rotatorischer Anschlag des Basiselements (B-Knuckle) 20 an einem rahmenfesten oder am Rahmen festlegbaren Element, insbesondere der Adaptermutter 66, vorgesehen, vorzugsweise ähnlich oder entsprechend wie bei den Ausführungsformen gemäß Fig. 2 bis 4, wie oben bereits beschrieben. Es kann also die erfindungsgemäße Einstelleinrichtung vorgesehen werden, die auch die Einstellung, Feineinstellung bzw. NachJustierung der Kettenspannung und der "Chain Gap" auf einfache Weise ermöglicht.

Es wird deshalb ohne Beschränkung der Allgemeinheit daran gedacht, dass die Ausführungsform gemäß Fig. 5 vor allem in zwei Varianten A) und B) vorliegen kann. Gemäß der Variante A) mit einem Verstellanschlag über die Einstellschraube (B-Schraube) 307 vergleichbar mit Fig. 2, wobei die Adaptermutter 66 (wie auch beim Stand der Technik EP'324) am Rahmenauge 201 rotatorisch reibschlüssig z.B. mittels Rändel festgelegt ist. Zum anderen gemäß Variante B) mit einem Verstellanschlag über die Einstellschraube (B-Schraube) 407 vergleichbar mit Fig. 3 bis 4, wobei die Adaptermutter 66 in diesem Fall rotatorisch formschlüssig mittels ihres Anschlagvorsprungs 421 am Rahmenauge 201 festgelegt ist.

Beide Varianten A) und B) der Ausführungsform gemäß Fig. 5 haben insbesondere den Vorteil, dass die oben beschriebene Einstellung des korrekten Chain Gap am Schaltwerk hier auch bei fest angezogener Steckachse jederzeit durch entsprechende Verstellung der Einstellschraube (B-Schraube) 307 bzw. 407 möglich ist. Der Eingriff der Steckachse 7 in den Adapterbolzen 61 braucht nicht gelöst oder gelockert werden.

Bei beiden Varianten A) und B) der Ausführungsform gemäß Fig. 5 ist jedoch das Basiselement (B-Knuckle) 20, und damit das Schaltwerk 10, auch im Fahrbetrieb prinzipiell frei nach hinten um die Hinterradachse schwenkbar (im Uhrzeigersinn bezogen auf Fig. 13 und 1), was somit unter Umständen zum Aufschwingen des Schaltwerks insbesondere bei schwerem Offroad-Betrieb führen könnte.

Dies wiederum kann bei den weiter oben beschriebenen beiden Ausführungsformen gemäß Fig. 2 bzw. gemäß Fig. 3 und 4 nicht auftreten, da der erste, linke Arm 22a des Basiselements 20 bei diesen beiden Ausführungsformen axial zwischen der rechten Nabenendkappe 4 und dem Rahmenadapter 60 geklemmt wird, sobald die Steckachse 7 fest in den Bolzen 61 des Rahmenadapters 60 eingeschraubt ist (vgl. Fig. 1). Wie beschrieben, muss dort jedoch zur rotatorischen Verstellung des Schaltwerks, beispielsweise um den Chain Gap einstellen oder verstellen zu können, zunächst die Klemmung übe die Steckachse 7 gelockert werden.

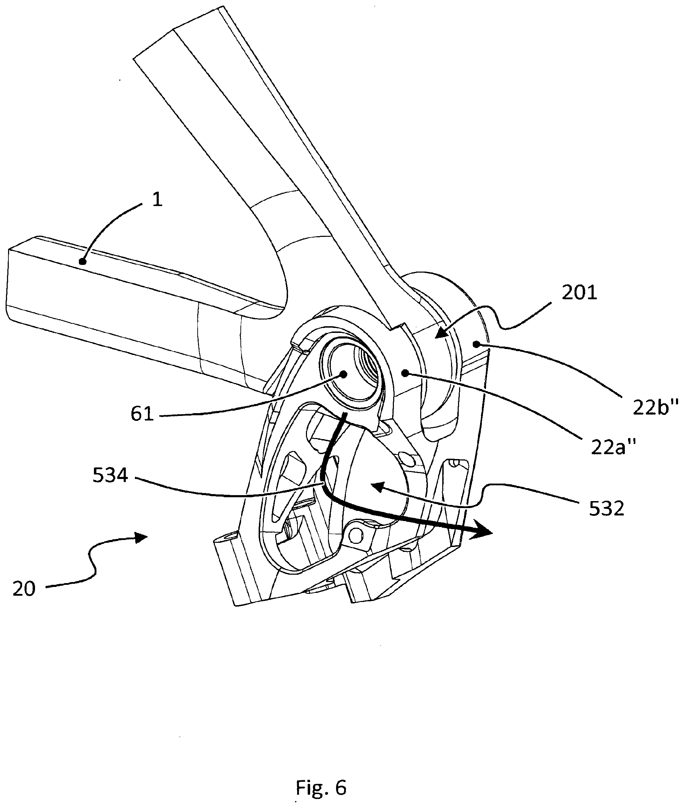

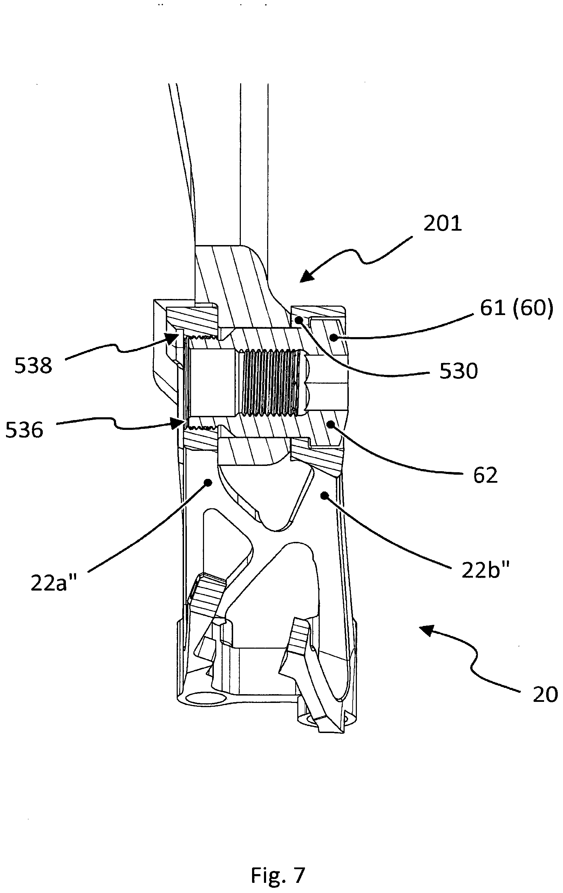

Fig. 6 und 7 zeigen eine weitere Ausführungsform einer koaxialen Schaltwerksanbindung. Mit dieser Ausführungsform lassen sich Anzahl und Komplexität der erforderlichen Einzelteile und damit die bei Herstellung und Montage anfallenden Kosten reduzieren.

Wie insbesondere in Fig. 7 erkennbar, kommt diese Ausführungsform ohne die Adaptermutter der vorstehend beschriebenen Ausführungsform aus, da der alleine den Adapter 60 bildende Adapterbolzen 61 hier direkt in den zeichnungsbezogen linken, ersten Arm 22a" des Basiselements (B-Knuckle) 20 geschraubt wird. Beim Festziehen des Adapterbolzens 61 erfolgt somit eine Verspannung zumindest des ersten Arms 22a" direkt gegen entsprechende Anlage-Stirnflächen am Rahmenauge 201. Im fertig montierten Zustand ist schlägt die rechte Nabenendkappe 4 der Hinterachsanordnung (vgl. Fig. 1 und Fig. 5) an einer Ring-Endfläche 536 des Adapterbolzens 61 oder direkt an dem Basiselement (B-Knuckle) an, und zwar an einem Ringflächenbereich 538 dessen ersten Arms 22a".

Der zweite Arm 22b" des Basiselement 20 der gezeigten Ausführungsform ist abweichend von den vorangehend beschriebenen Ausführungsformen mit einem Ringflansch 530 ausgeführt, der beim Festziehen des Adapterbolzens 61 zwischen dem Bolzenkopf 62 und einer außenseitigen Anlage-Stirnflächen am Rahmenauge 201 eingespannt wird. Je nach Toleranzlage kann das Basiselement 20 bei diesem beidseitigen Festspannen am Rahmenauge 201 geringfügig elastisch verformt werden, indem die beiden Arme 22a", 22b" des Basiselements zueinander gebogen werden.

Bei dieser Ausführungsform wird also das Basiselement 20 weitgehend unverrückbar mit dem Rahmenauge 201 verbunden, unabhängig davon, ob eine Steckachse 7 eingesetzt und festgezogen ist oder nicht. Dies bedeutet insbesondere, dass das Schaltwerk hier auch bei gelöster bzw. entfernter Steckachse nicht mehr rotatorisch geschwenkt werden kann, insbesondere auch nicht im Uhrzeigersinn (gemäß den Fig. 14 und 15) nach hinten. Das Hinterrad kann somit nicht ohne weiteres wie bei herkömmlichen Systemen herausgenommen werden, indem das Schaltwerk 10 nach hinten verschwenkt und sodann das Hinterrad senkrecht nach unten herausgenommen wird.

Aus diesem Grund ist bei dieser Ausführungsform das Basiselement 20 an seinem inneren ersten Arm 22a" speziell gestaltet, nämlich mit einer Aussparung 532 für den Radausbau, die insbesondere in Fig. 6 erkennbar ist. Somit kann das Laufwerk dennoch leicht herausgenommen werden, ohne das Schaltwerk verschwenken zu müssen. Hierzu ist lediglich die Steckachse zu lösen und herauszunehmen, wonach das Hinterrad entlang des in Fig. 6 angedeuteten Entnahmepfads 534 aus dem Hinterbau entnommen werden kann. Angemerkt sein, dass solch eine Ausführungsweise des Basiselements auch generell vorteilhaft ist und bei allen einschlägigen Ausführungsformen eines koaxial relativ zu der Hinterradachse am Rahmen montierten hinteren Schaltwerks anwendbar ist, damit das Hinterrad ohne Verschwenken des Schaltwerks ausgebaut werden kann.

Auch bei der Ausführungsform gemäß Fig. 6 und 7 kann zusätzlich eine Anschlagschraube oder Verstellschraube (B-Schraube) vorgesehen werden.

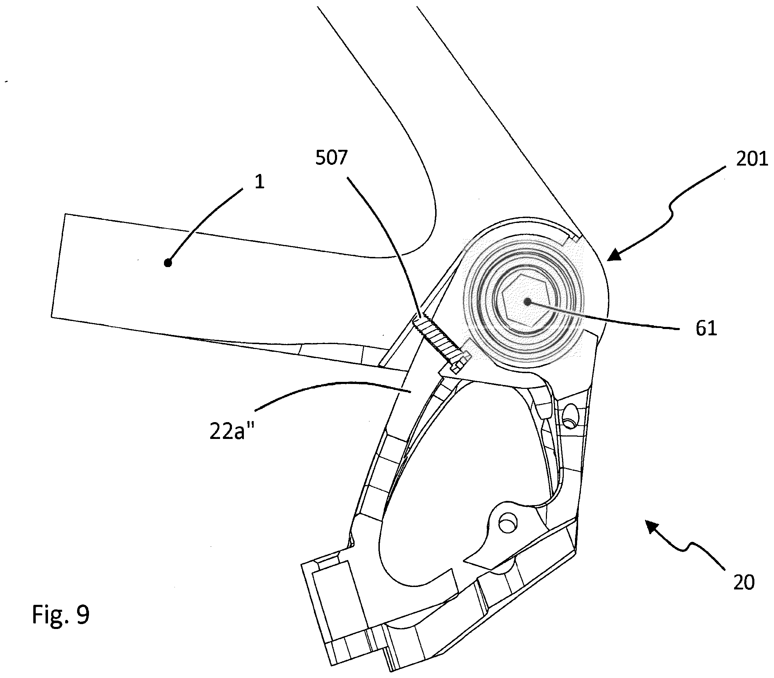

Eine mögliche Anordnung der Verstellschraube (B-Schraube) ist in den eine entsprechende Ausführungsvariante darstellenden Fig. 8 und 9 gezeigt. Die Verstellschraube 507 schlägt beispielsweise direkt am Rahmen an, an einer Anschlagfläche 540. Mit dieser Verstellschraube 507 wird die Einstellung des korrekten Chain Gap, bevor der Adapterbolzen 61 festgezogen wird, erleichtert. Die manuell betätigbare Einstelleinrichtung wird von einem als Gewindesockel dienenden Abschnitt des Basiselements 20, insbesondere dessen ersten Arm 22a" oder zweiten Arms 22ab" (vorzugsweise des ersten Arm 22a"), der Verstellschraube 507 und der Anschlagfläche 540 an einer Rahmenformation des Rahmenauges oder benachbart dem Rahmenauge 201 gebildet. Ansonsten entspricht diese Ausführungsvariante identisch den Figuren 6 und 7.

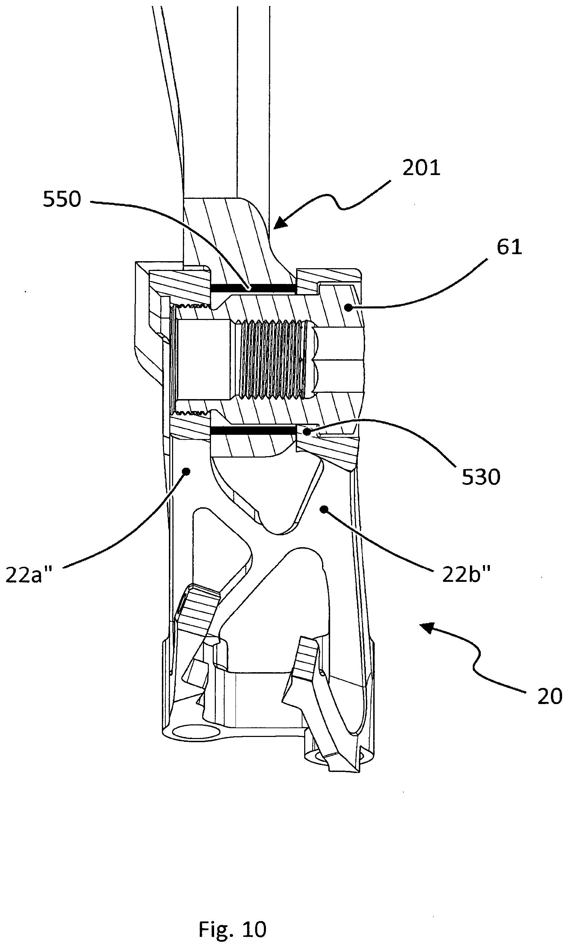

Fig. 10 zeigt schematisch eine weitere Variante der Ausführungsformen gemäß den Fig. 6 bis 9. Diese besteht darin, dass radial zwischen dem Außenumfang des Adapterbolzens 61 und dem Innenumfang der Bohrung des Rahmenauges 201 eine Abstandshülse 550 angeordnet ist. Die Abstandshülse 550 führt dazu, dass beim Festziehen des Adapterbolzens 61 in dem Innengewinde des ersten Arms 22a" die Klemmung zwischen den beiden Armen 22a", 22b" des Basiselements 20 und der Abstandshülse 550 erfolgt. Bei entsprechender Bemessung der Länge der Abstandshülse 550 findet somit keine Klemmung der Arme 22a", 22b" des Basiselements 20 an den Stirnflächen des Rahmenauges 201 statt, wie dies bei den vorangehenden Ausführungsformen gemäß Fig. 6 bis 9 der Fall ist (vgl. insbesondere Fig. 7). Somit bleibt das Basiselement 20 auch nach dem Festziehen des Adapterbolzens 61 zunächst frei um die Hinterachse schwenkbar.

In dieser Hinsicht entspricht die Ausführungsform gemäß Fig. 10 somit der Ausführungsform gemäß Fig. 5. Aus diesem Grund erfordert auch die Ausführungsform gemäß Fig. 10 einen vorzugsweise verstellbaren Vorn- oder Vorwärtsanschlag, besonders günstig durch eine Einstellschraube, ähnlich wie in Fig. 2 bis 4 sowie 8 bzw. 9 dargestellt. Die Ausführungsvariante der Fig. 10 kann diesbezüglich beispielsweise der Ausführungsvariante der Fig. 8 und 9 entsprechen.

Die Fig. 11 bis 13 zeigen eine weitere Ausführungsform einer koaxialen Schaltwerksanbindung. Auch bei dieser Ausführungsform wird die Einstellung des Chain Gap, wie bei den vorstehenden Ausführungsformen, zunächst über die rotatorische Schwenkposition des gesamten Basiselements (B-Knuckle) 20 bezüglich des Rahmenauges 201 vorgenommen. Da das Basiselement 20 bei dieser Ausführungsform zweiteilig mit einem am Rahmenauge 201 montierten ersten Teilelement 20a und einem über ein zusätzliches Gelenk 650 gegenüber dem ersten Teilelement schwenkbaren zweiten Teilelement 20b aufweist, kann der "Chain Gap" bzw. die Kettenspannung bei Bedarf später verändert bzw. ' feineingestellt werden, indem über eine Verstellschraube 607 die Schwenkposition des zweiten Teilelements 20b wird.

Betreffend die Realisierung der die Verstellschraube 607 aufweisenden Einstelleinrichtung bestehen diverse Möglichkeiten. Bei der hier gezeigten Ausführungsform wird die (hier nur schematisch dargestellte) Verstellschraube 607 im Betrieb bzw. auf Grundlage der Kettenspannung auf Zug belastet. Hierzu können von dem Element 605a des ersten Teilelements 20a und dem Element 605b des anderen Teilelements 20b ein Element als ein Gewindesockel und das andere Element als eine die Verstellschraube als zumindest in Bezug auf Zug abstützende Drehhalterung ausgeführt sein. Die Verstellschraube 607 steht im Schraubeingriff mit dem Gewindesockel und ist in der Drehhalterung verdrehbar gehalten. Aus einem Vergleich der verschiedene Schwenkwinkel zwischen den Teilelementen zeigenden Fig. 11 und 12 ergibt sich, dass das Element 605a als Drehhalterung und demensprechend das Element 605b als Gewindesockel ausgeführt ist.

Eine andere Möglichkeit ist, beide Elemente 605a und 605a als Gewindesockel auszuführen, die entgegengesetzt orientierte Innengewinde aufweisen, mit denen die Verstellschraube im Schraubeingriff steht.

Figur 14 zeigt exemplarisch ein Fahrrad mit einem aus dem Stand der Technik bekannten Fahrradantrieb. Der Fahrradantrieb umfasst ein vorderes Kettenrad CR, ein hinteres Ritzelpaket R und eine Kette K, die mittels des hinteren Schaltwerks RD von einem Ritzel zum nächsten bewegt werden kann. Die im Folgenden verwendeten Richtungsangaben rechts/links und vorne/hinten beziehen sich auf ein Fahrrad in Fahrtrichtung. Der Fahrradrahmen 1 hat ein linkes und ein rechtes hinteres Ausfallende oder Rahmenauge, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse Ader Mehrfach-Ritzelanordnung R. Das größte Ritzel liegt axial weiter innen als die kleineren Ritzel. Die Zähne sind radial außen an den Ritzeln angeordnet. Der Außendurchmesser eines Ritzels ist das radial äußere Ende, der Innendurchmesser das radial innere Ende des Ritzels. Das hier gezeigte Schaltwerk RD ist auf herkömmliche Weise mit einem Schaltauge am rechten Ausfallende des Rahmens befestigt. Damit ist das bekannte Schaltwerk RD von der Hinterradachse A beabstandet und nicht koaxial mit dieser montiert. Das Schaltwerk RD dreht sich um die B-Achse, welche von der Achse A beabstandet ist. Der Schwenkmechanismus des Schaltwerks ist als Schrägparallelogramm ausgeführt.

Die folgenden Figuren 15 bis 23 zeigen demgegenüber ein koaxial zu der Hinterradachse montiertes bzw. montierbares hinteres Schaltwerks und der zugeordneten Hinterradachsanordnung, in verschiedene Montagestadien und in unterschiedlich großen Maßstäben für ein besseres Verständnis dieser sich vom Stand der Technik der Fig. 14 absetzenden bekannten Lösung.

Figur 15 zeigt eine perspektivische Ansicht des bekannten hinteren Schaltwerks 10 gemäß der EP'324, also der Offenlegungsschrift EP 3 388 324 A2. Das hintere Schaltwerk 10 ist koaxial an der Hinterradachse 6 montiert. Zur besseren Übersichtlichkeit sind das Hinterrad und das Ritzelpaket nicht dargestellt. Zu sehen ist die zwischen den beiden Ausfallenden des Rahmens 1 angeordnete Hinterradnabe 3 und das, das rechte Ausfallende umgreifende Schaltwerk 10. Das Basiselement 20 ist mittels des Adapters 60 koaxial mit der Achse A am Rahmen 1 montiert.

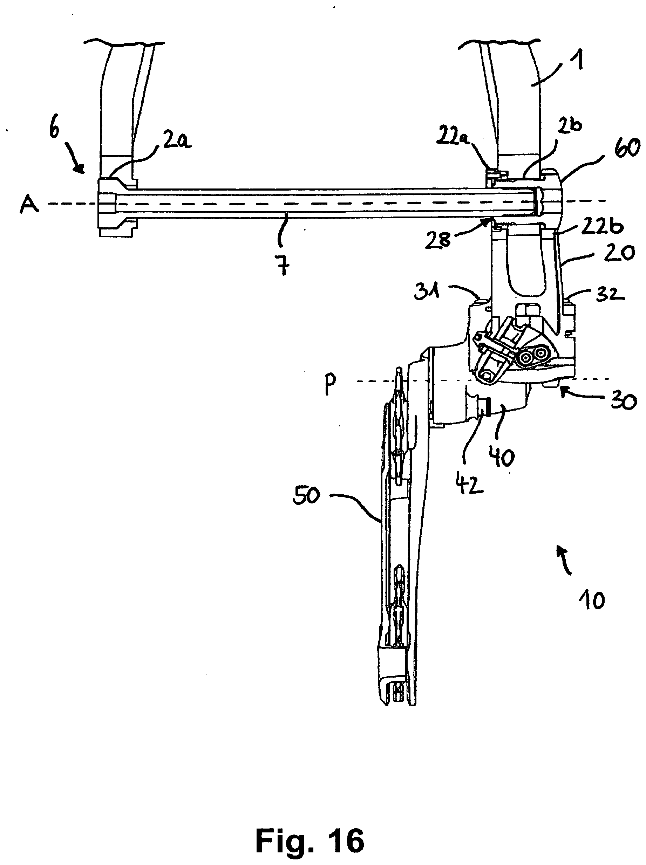

Figur 16 zeigt einen Schnitt entlang der Achse A des in Figur 1 dargestellten Schaltwerks 10 in der Rückansicht. Die geometrische Achse A erstreckt sich entlang der Hinterradachse 6. Einfachheitshalber ist in dieser Darstellung nur die Steckachse 7 und nicht die übrigen Teile der Achs- und Nabenanordnung gezeigt. Das Basiselement 20 ist mittels des Adapters 60 am rechten Ausfallende befestigt. Dazu durchgreift der Adapter 60 die rechte Rahmenöffnung 2b. Die Steckachse 7 ist in die linke Rahmenöffnung 2a eingesteckt und mit dem Adapter 60 verschraubt. Der Adapter 60 dient gleichzeitig als Konter für die Steckachse 7. Wenn die Steckachse 7 angezogen wird, schraubt sie sich weiter in den Adapter 60 und klemmt gegenüber dem Rahmen 1.

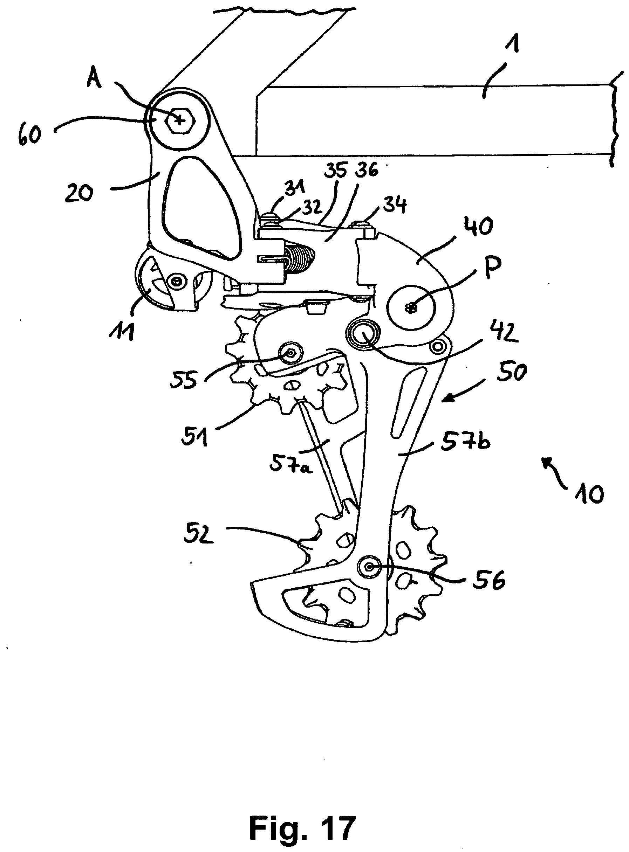

Figur 17 zeigt eine Seitenansicht des koaxial zur Hinterradachse am Rahmen 1 montierten Schaltwerks 10 aus Figur 2. Die Figuren 15 bis 17 zeigen jeweils das gesamte Schaltwerk 10 mit dem Basiselement 20, dem Schwenkmechanismus 30, dem beweglichen Element 40 und der Kettenführungsanordnung 50. An dem Basiselement 20 ist eine Seilumlenkung 11, hier in Form einer an der Anschlussstelle 29c drehbar gelagerten Seilumlenkungsrolle angeordnet. Das Basiselement 20 ist an seinem ersten, oberen Anschlussende koaxial mit der Hinterradachse A am Rahmen 1 montiert. Dazu umgreifen zwei in axialer Richtung voneinander beabstandete Arme des Basiselements 20 das Ausfallende des Rahmens 1, so dass ein Arm auf der Innenseite des Rahmens 1 und der andere Arm auf der Außenseite des Rahmens 1 angeordnet ist. Das Basiselement 20 wird mit dem Adapter 60 am Rahmen 1 vormontiert.

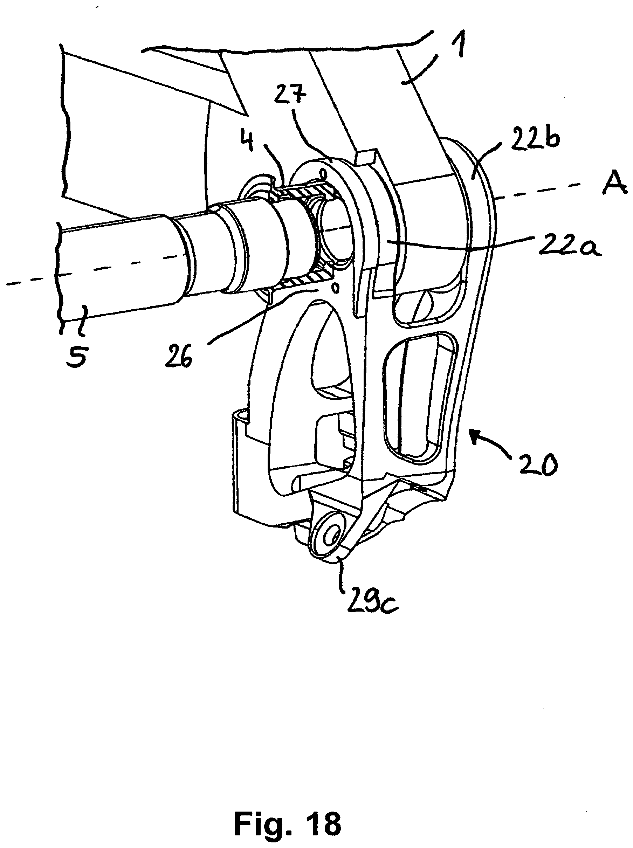

Weiter ist das Basiselement 20 an seinem zweiten, unteren Anschlussende mit dem Schwenkmechanismus 30 gekoppelt. Der Schwenkmechanismus 30 ist als Parallelogramm-Viergelenk mit einem inneren Schwenkarm 35, einem äußeren Schwenkarm 36 und vier Schwenkachsen 31, 32, 33, 34 ausgebildet. Die vier Schwenkachsen 31, 32, 33, 34 verlaufen jeweils in Ebenen, die die Achse A im rechten Winkel schneiden. Mit anderen Worten liegen die Schwenkachsen 31, 32, 33, 34 in Ebenen, die sich parallel zu den hier nicht gezeigten Ritzelebenen erstrecken. Die erste und zweite Schwenkachse 31, 32 verbindet den Schwenkmechanismus 30 mit dem Basiselement 20. Die dritte und vierte Schwenkachse 33, 34 verbindet den Schwenkmechanismus 30 mit dem beweglichen Element 40. Sowohl das Basiselement 20, als auch das bewegliche Element 40 weisen jeweils zwei Aufnahmen für die Schwenkachsen auf. Die Längsachsen L1, L2 der Aufnahmen am Basiselement 20 und die Längsachsen der Aufnahmen am beweglichen Element 40 sind wie die Schwenkachsen 31, 32, 33, 34 selbst orthogonal zur Hinterradachse 6 bzw. der Achse A ausgerichtet (vgl. Figuren 18 bis 23).

Die Kettenführungsanordnung 50 ist um die Achse P drehbar mit dem beweglichen Element 40 verbunden und im Uhrzeigersinn (nach hinten) vorgespannt, so dass eine hier nicht gezeigte, die Kettenführung 50 s-förmig durchlaufende Kette gespannt wird. Die Kettenführungsanordnung 50 umfasst ein oberes und ein unteres Kettenführungsröllchen 51, 52, die jeweils zwischen zwei Käfighälften 57a, 57b drehbar gelagert sind. Das obere Kettenführungsröllchen 51 ist in einem oberen Abstand von der Achse P um die obere Drehachse 55 drehbar angeordnet. Das untere Kettenführungsröllchen 56 ist in einem unteren Abstand von der P-Achse um die untere Drehasche 56 drehbar angeordnet, wobei das obere Kettenführungsröllchen 51 in einem kleineren Abstand von der P-Achse als das untere Kettenführungsröllchen 52 angeordnet ist. Das bewegliche Element 40 weist ein Arretierungselement 42 auf, das es erlaubt, die vorgespannte Kettenführungsanordnung 50 gegenüber dem beweglichen Element 40 festzulegen. So kann das Schaltwerk 20 montiert werden, ohne dass die Kettenführungsanordnung 50 aufgrund der Vorspannung nach hinten schnappt.

Beim Schalten auf ein kleineres Ritzel dreht sich die Kettenführungsanordnung 50 um die Drehachse P des beweglichen Elements 40 im Uhrzeigersinn nach hinten. Umgekehrt dreht sich die Kettenführungsanordnung 50 beim Schalten auf ein nächstgrößeres Ritzel um die Drehachse P gegen den Uhrzeigersinn nach vorne. Durch die Drehbewegung um die Achse P, wird das obere Kettenführungsröllchen 51 radial auf die Ritzel zu- oder wegbewegt. In axialer Richtung wird die Kettenführungsanordnung 50 bewegt, indem die Schwenkarme 35, 36 um die Schwenkachsen 31, 32, 33, 34 verschwenkt werden. Je nach Schaltrichtung bewegt sich das obere Kettenführungsröllchen 51 zusammen mit der gesamten Kettenführungsanordnung 50 in axialer Richtung nach innen oder außen.

Figur 18 und 19 zeigen jeweils perspektivische Teilschnitte des mit Hilfe des Adapters 60 am Rahmen 1 montierten Basiselements 20 und Teile der Nabenanordnung. Der erste Arm 22a und der zweite Arm 22b sind jeweils auf einer Seite des Rahmens 1 positioniert. Zur Montage des hier nicht gezeigten Hinterrads wird dieses zusammen mit der Nabenanordnung (hier ist nur die Hohlachse oder Nabenachse 5 gezeigt) und die Nabenendkappe 4 entlang der Nabenführung 27 auf der Innenseite des Basiselements 20 geführt. Die Nabenführung 27 ist als Bund mit aufeinander zulaufenden Führungsflächen ausgebildet. Die Nabenendkappe 4 liegt in ihrer Endposition radial an der Nabenführung 27 an. In axialer Richtung stößt die Nabenendkappe 4 gegen die axiale Nabenanschlagsfläche 26 auf der Innenseite des Basiselements 20. Die Nabenendkappe 4 ist geschnitten dargestellt.

Figur 19 zeigt einen Schnitt durch das Basiselement 20 mit den zwei den Adapter 60 umgreifenden Armen 22a, 22b. Der Adapter 60 besteht aus dem Bolzen 61 und der Mutter 66. Der Bolzen 61 wird in die Mutter 66 eingeschraubt, so dass der Bolzenkopf 62 und die Mutter 66 am Rahmen 1 geklemmt werden. Der Adapter 60 ist so gegenüber dem Rahmen 1 festlegbar. Das Basiselement 20 ist auf dem Adapter 60 zentriert. In fahrbereitem Zustand, bei festgezogener Steckachse 7, ist das Basiselement 20 zwischen der Nabenendkappe 4 und dem Adapter 60 drehfest geklemmt. Das Basiselement 20 liegt in fertig montiertem Zustand in axialer Richtung nur an der Nabenendkappe 4 und am Adapter 60 an. Das Basiselement 20 ist indirekt über den Adapter 60 am Rahmen 1 montiert. Das Basiselement 20 und damit das gesamte Schaltwerk 10 ist an der Nabe 4 referenziert - und nicht wie üblich am Rahmen 1.

Figur 20 zeigt den vergrößerten Teilschnitt des mit dem Adapter 60 am Rahmen 1 montierten Basiselements 20 aus Figur 19. Der Bolzenkopf 62 und die Mutter 66 sind größer als die Rahmenöffnung 2b bemessen. Wenn der Adapter 60 festgezogen ist, liegen der Bolzenkopf 62 und die Mutter 66 reibschlüssig am Rahmen 1 an. Die Mutter 66 weist eine Rändelfläche 69 auf, um zusätzlich eine formschlüssige Verbindung zum Rahmen 1 herzustellen und einem Verdrehen des Schaltwerks 10 nach vorne (gegen den Uhrzeigersinn) entgegenzuwirken. Der Bolzenkörper 63 hat einen Anlagebereich 63a, der an der Rahmenöffnung 2b mit wenig Spiel anliegt und einen Ausgleichsbereich 63b, der gegenüber der Rahmenöffnung 2b mehr Spiel hat. Der Ausgleichsbereich 63b ermöglicht, dass sich der Adapter 60 in der Rahmenöffnung 2b entlang der Achse A ausrichtet. Der Bolzen 61 hat in der Rahmenöffnung 2b Spiel und kann darin etwas verkippen, falls die Rahmenöffnung nicht genau mit der Achse A fluchtet.

Figur 21 zeigt die Anordnung aus Figur 20 mit geschnittenem Adapter 60. Der Adapter 60 hat zwei Aufgaben: 1) Die Klemmung am Rahmen 1 wird durch die Schraubverbindung zwischen Bolzen 61 und Mutter 66 hergestellt. Alternativ könnte auch die Mutter außen und der Bolzen innen angeordnet sein. Wichtig ist, dass der Adapter 60 gegenüber dem Rahmen 1 festlegbar ist und auf diesen in axialer Richtung anpassbar ist. Bei einem dünneren Rahmen wird die Schraubverbindung weiter angezogen als bei einem dickeren Rahmen. 2) Der Adapter 60 ist gegenüber dem Basiselement 20 im Uhrzeigersinn nur begrenzt verdrehbar und stellt damit eine Verdrehsicherung und einen Vorwärtsanschlag dar. Dazu sind an der Mutter 66 zwei Anschläge 68a, 68b angeordnet, die mit zwei Stiften 24a, 24b am Basiselement 20 zusammenwirken. Eine Verdrehung des Schaltwerks 10 nach vorne (gegen den Uhrzeigersinn) ist aufgrund der Verdrehsicherung zwischen Adapter 60 und Basiselement 20 nur begrenzt möglich. Die Verdrehsicherung ersetzt die übliche B-Schraube und schützt vor einem ungewollten Verdrehen des Schaltwerks nach vorne. Aus der durch den Anschlag der Stifte 24a, 24b an den Anschlägen 68a, 68b definerten Schwenkstellung des Basiselements 20 am Rahmen 1 resultiert eine entsprechende Spannung der durch die Kettenführungsanordnung 50 geführten Kette und ein entsprechender Abstand des obersten Kettenführungsröllchens von einem Referenzritzel des Ritzelpakets (sog. "Chain Gap", als "Kettenlücke" übersetzbar).

Das Außengewinde 64 und das Innengewinde 65 des Bolzens 61 sind in verschiedenen Bereichen entlang des Bolzens 61 angeordnet, um so Kräfte besser aufnehmen zu können. Die Steckachse 7 wird in das Innengewinde 65 eingeschraubt und zieht den Adapter 60, insbesondere den Bolzenkopf 62, gegen die Außenseite des Rahmens 1. Im gezeigten Ausführungsbeispiel ist eine Unterlegscheibe zwischen dem Bolzenkopf 62 und dem Rahmen 1 angeordnet.

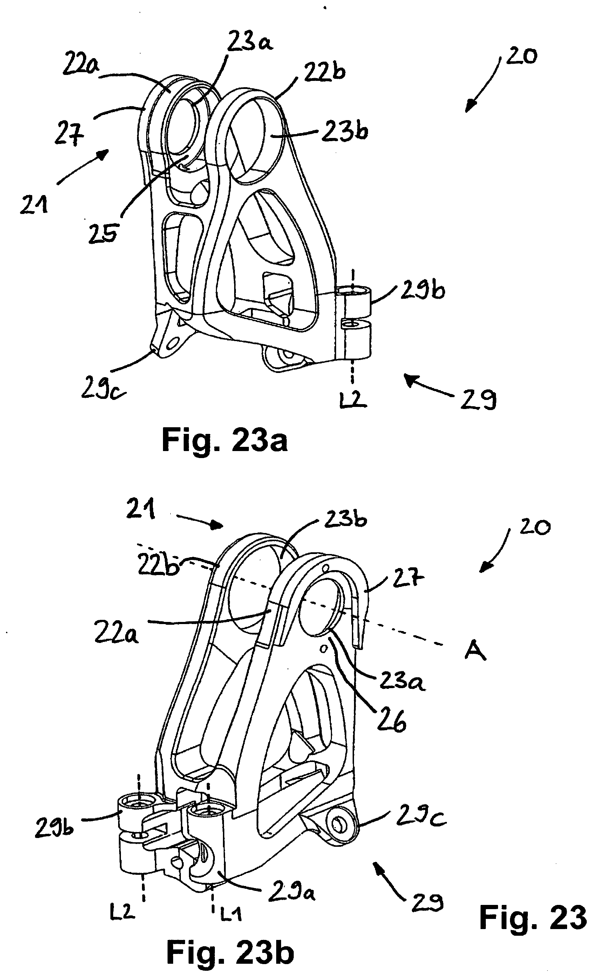

Vergleiche hierzu auch Figur 22, eine Explosionsdarstellung des nicht montierten Basiselements 20 und des Adapters 60 aus Figur 21. In dieser Ansicht ist das Innengewinde 67 der Mutter 66 und das Außengewinde 64 des Bolzens 61, die zusammen die Schraubverbindung des Adapters 60 bilden, gut zu erkennen. Alternativ könnte der Bolzen auch direkt in ein Gewinde der Rahmenöffnung eingeschraubt werden. Dann würden sich Rahmentoleranzen aber direkt auf das Schaltwerk auswirken, was es zu vermeiden gilt. Weiterhin ist der auf die erste Zentrieröffnung 23a abgestimmte Bolzenfuß 63c und der auf die zweite Zentrieröffnung 23b abgestimmte Bolzenkopf 62 zu sehen. Die Anschlagsfläche 63d des Bolzens 61 wirkt mit der hier abgewendeten Außenseite des ersten Arms 22a des Basiselements 20 zusammen (vgl. Figur 23a).

Figur 23a und 23b zeigen eine perspektivische Außen- und Innenansicht des Basiselements 20 mit der ersten und zweiten Zentrieröffnung 23a, 23b. Die erste Zentrieröffnung 23a ist auf den Außendurchmesser des Bolzenfußes 63c des Bolzens 61 abgestimmt. Die zweite Zentrieröffnung 23b ist auf den Außendurchmesser des Bolzenkopfes 61 abgestimmt. Auf der Außenseite des ersten Arms 22a ist die Adapteranschlagsfläche 25 zu sehen, die mit der Anschlagsfläche 63d des Bolzens 61 zusammenwirkt. Auf der gegenüberliegenden Innenseite des ersten Arms 22a ist die Nabenanschlagsfläche 26 angeordnet. In fahrbereitem Zustand wird der Bolzen 61 mit der Bolzenanschlagsfläche 63d gegen die Außenseite und die Nabenendkappe 4 gegen die Innenseite des Basiselements 20 geklemmt. Am unteren Anschlussende des Basiselements 20 befindet sich die Anschlussstelle 29c für eine Seilumlenkung 11. Des Weiteren befinden sich am unteren Anschlussende des Basiselements 20 die erste Aufnahme 29a für die erste Schwenkachse 31 und die zweite Aufnahme 29b für die zweite Schwenkachse 32 des hier nicht gezeigten Schwenkmechanismus 30. Die Längsachsen L1, L2 der ersten und zweiten Aufnahmen 29a, 29b verlaufen in Ebenen, die die Hinterradachse A jeweils im rechten Winkel schneiden. Die vier Schwenkachsen 31, 32, 33, 34 des Parallelogramm-Viergelenks 30 sind also unabhängig von der gewählten Relativstellung des Schaltwerks 10 orthogonal zur gemeinsamen Ritzelachse A ausgerichtet.

Ergänzend wird auch auf die weitere Offenbarung der EP'324 verwiesen, aus der sich weitere Ausführungsmöglichkeiten und Ausführungsvarianten des bekannten. koaxial in Bezug auf die Hinterradachse A montierten hinteren Schaltwerks 10 ergeben, die auch auch Ausführungsmöglichkeiten und Ausführungsvarianten eines erfindungsgemäßen hinteren Schaltwerks gemäß den verschiedenen Aspekten der vorliegenden Erfindung in Betracht kommen, soweit sich aus den Angaben hierin zu den Erfindungs- und Weiterbildungsvorschlägen unter den verschiedenen Aspekten der Erfindung und der Beschreibung der erfindungsgemäßen Ausführungsbeispiele nichts anderes ergibt.

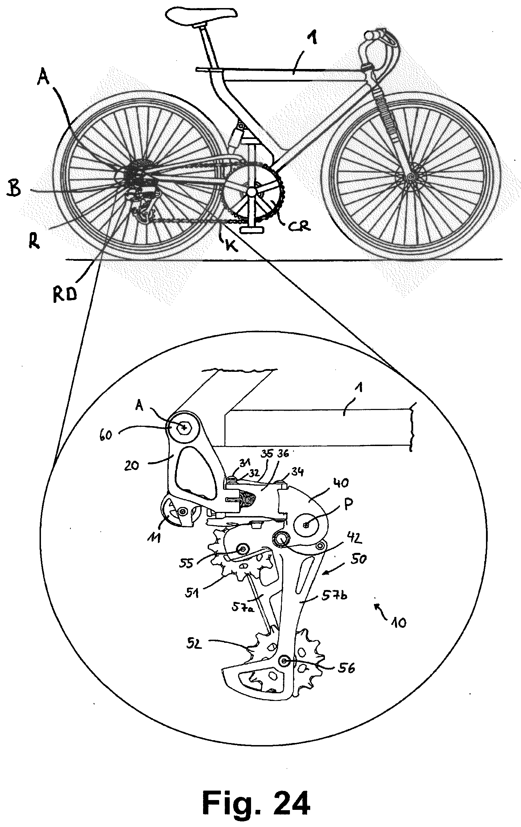

Ein erfindungsgemäßes Fahrrad ist beispielhaft in der schematischen Figur 24 in einer Seitenansicht gezeigt, wobei ein hinterer rechter Rahmenabschnitt mit dem Rahmenauge oder Ausfallende, an dem das erfindungsgemäße Schaltwerk koaxial zu der Hinterachse des Fahrrads montiert ist, in einer vergrößerten Teilansicht im Stil einer lupenartigen Vergrößerung dargestellt ist.

Fig. 24 zeigt im Allgemeinen ein Fahrrad beispielsweise in Off-Road oder Mountainbike-Konfiguration einschließlich einer Antriebsanordnung. Das Fahrrad besteht aus einem Rahmen 1 und dem vorderen Laufrads oder Vorderrad und dem hinteren Laufrad oder Hinterrad, die drehbar am Rahmen 1 befestigt sind. Eine Vorderradbremse ist für die Abbremsung des Vorderrades und eine Hinterradbremse die Abbremsung des Hinterrades vorgesehen. Jedes der Vorder- und Hinterräder enthält einen Reifen, der an einer Felge befestigt ist, wobei die Reifen so konfiguriert sind, dass sie mit der Fahrfläche in Eingriff kommt. Zum Lenken des Vorderrads ist eine Lenkerbaugruppe vorgesehen.

Andere Konfigurationen des Fahrrads 10 werden in Betracht gezogen. Zum Beispiel kann das Fahrrad eine für Fahrten auf Straßen optimierte straßenähnliche Konfiguration haben. Konfigurationsunterschiede zwischen Mountainbikes und Straßenfahrrädern können sich beispielsweise aus der Verwendung unterschiedlicher Lenkereinheiten ergeben. Fig. 24 zeigt zum Beispiel die Lenkereinheit in einer flachen Konfiguration, etwa in der Form eines typischen MTB-Lenkers, während ein Straßenmodell eine Lenkereinheit in Rennlenkerkonfiguration haben kann. In Frage kommende generelle Konfigurationen des Fahrrads und seiner üblichen Komponenten sind dem Fachmann bekannt.

Zu weiteren Einzelheiten des erfindungsgemäßen Fahrrads gemäß Fig. 24 wird auf die vorstehenden Ausführungen zu Fig. 14 verwiesen. In Abweichung hiervon ist das Fahrad mit einem erfindungsgemäßen Schaltwerk 10 ausgestattet, wofür das Fahrrad ensprechend konfigurierte Rahmenschnittstellen, nämlich geeignet ausgeführte hintere Rahmenaugen oder Ausfallenden aufweist. Das die beiden axial beabstandeten Arme aufweisende Basiselement (B-Knuckle) 20 des hinteren Schaltwerks 10 ist mittels des Rahmenadapters 60 am hinteren rechten Rahmenauge koaxial zu Hinterachse montiert, bemäß einem oder mehreren der hierin beschriebenen Erfindungsvorschlägen. Ohne Beschränkung der Allgemeinheit könnte es sich bei dem dargestellten hinteren Schaltwerk 10 um ein beliebiges der hinteren Schaltwerke der Figuren 2 bis 10 handeln, beispielsweise um das hintere Schaltwerk der Fig. 2. Es ist für den Fachmann auf Grundlage der hierin vorgestellten und erläuterten Erfindung eine rein handwerkliche Aufgabe, bei der konkreten Realisierung des erfindungsgemäßen Fahrrads mit seinem erfindungsgemäßen hinteren Schaltwerk den eingangs angesprochenen Zielsetzungen der richtigen Positionierung und Ausrichtung, Präzision und Steifigkeit gerecht zu werden.

## Patentansprüche

1. Hinteres Schaltwerk (10) zur in Bezug auf eine Hinterradachse (A) koaxialen Montage an einem Fahrradrahmen (1) eines Fahrrads, aufweisend:
- ein Basiselement (20),
- einen Schwenkmechanismus (30),
- ein bewegliches Element (40), und
- eine Kettenführungsanordnung (50);
wobei der Schwenkmechanismus (30) das Basiselement (20) mit dem beweglichen Element (40) verbindet, und die Kettenführungsanordnung (50) um eine Drehachse (P) drehbar mit dem beweglichen Element (40) verbunden ist;
wobei das Basiselement (20) ein erstes Anschlussende (21) zur in Bezug auf die Hinterradachse (A) koaxialen Montage an dem Fahrradrahmen (1) und ein zweites Anschlussende (29) zur Kopplung mit dem Schwenkmechanismus (30) umfasst;
wobei das erste Anschlussende (21) einen ersten Arm (22a; 22a'; 22a") und einen zweiten Arm (22b; 22b") aufweist, die in axialer Richtung voneinander beabstandet angeordnet und zur Montage des Schaltwerks (10) an einem zugeordneten Halterungsabschnitt (201) eines Hinterbaus des Fahrradrahmens (1) mittels eines zugehörigen Adapters (60) eingerichtet sind, wobei der Adapter (60) ein Gewinde zur Herstellung einer Schraubverbindung aufweist;
und wobei sich in einem definierten vormontierten Zustand und in einem fertig montierten Zustand der erste Arm (22a; 22a'; 22b") auf einer axialen Innenseite des Halterungsabschnitts und der zweite Arm (22b; 22b") auf einer axialen Außenseite des Halterungsabschnitts befinden;
**dadurch gekennzeichnet, dass** das Basiselement (20) mit einer wenigstens eine manuell betätigbare Verstellschraube (307; 407; 507; 607) aufweisenden Einstelleinrichtung ausgeführt ist, welche separat von dem Adapter (60) ausgebildet ist und mit der das Basiselement (20) in wenigstens einem von dem vormontierten Zustand und dem fertig montierten Zustand relativ zu wenigstens einem von dem Adapter (60) und dem Halterungsabschnitt (201) koaxial zur Hinterradachse in einer Kettenspannrichtung verschwenkbar ist.

2. Hinteres Schaltwerk (10) nach Anspruch 1, **dadurch gekennzeichnet, dass** ein Innendurchmesser einer im ersten Arm (22a') vorgesehenen ersten Zentrieröffnung (23a) des Basiselements (20) und ein Außendurchmesser eines Anschlagelements (4), insbesondere Nabenendkappe (4), einer Hinterradachsanordnung eines hinteren Laufrads des Fahrrads aufeinander abgestimmt sind, um vermittels des Anschlagelements (4) das Schaltwerk (10) in Bezug auf die Hinterradachse (A) zu zentrieren.

3. Hinteres Schaltwerk (10) nach Anspruch 1 oder 2, **dadurch gekennzeichnet, dass** im fertig montierten Zustand des hinteren Schaltwerks (10) die axiale Anschlagfläche des Anschlagelements (4), insbesondere Nabenendkappe (4), der Hinterradachsanordnung an einer axialen Anschlagfläche des Adapters (60) unter Spannung unmittelbar anliegt.

4. Hinteres Schaltwerk nach Anspruch 1 oder 3, **dadurch gekennzeichnet, dass** der Adapter (60) einteilig ausgeführt ist.

5. Hinteres Schaltwerk nach Anspruch 4, **dadurch gekennzeichnet, dass** der vorzugsweise als Adapterbolzen (61) ausgeführte Adapter (60) an einem Außengewinde (64) mit einem Innengewinde des ersten Arms (22a") des Basiselements (20) verschraubbar ist.

6. Hinteres Schaltwerk nach Anspruch 5, **dadurch gekennzeichnet, dass** der Adapter (60) sowie der erste Arm (22a") und der zweite Arm (22b") des Basiselements (20) dafür eingerichtet sind, durch Festziehen des Adapters (60) den axiale Anlageflächen aufweisenden Halterungsabschnitt des Fahrradrahmens (1) zwischen zugeordneten axialen Anlageflächen des ersten Arms (22a") und des zweiten Arms (22b") oder zwischen zugeordneten axialen Anlageflächen des ersten Arms (22a") und eines Bolzenkopfs (62) des Adapters (60) axial einzuspannen.

7. Hinteres Schaltwerk nach Anspruch 5, **gekennzeichnet durch** eine Abstandshülse (550), die dafür dimensioniert ist, in einem Durchgang des Halterungsabschnitts (201) des Fahrradrahmens aufgenommen zu werden, wobei der Adapter (60) und die Abstandshülse (550) sowie der erste Arm (22a") und der zweite Arm (22b") des Basiselements (20) dafür eingerichtet sind, durch Festziehen des Adapters (60) die in den Durchgang des Halterungsabschnitts (201) des Fahrradrahmens aufgenommene Abstandshülse (550) zwischen zugeordneten axialen Anlageflächen des ersten Arms (22a) und des zweiten Arms (22b) oder zwischen zugeordneten axialen Anlageflächen des ersten Arms (22a) und eines Bolzenkopfs (62) des Adapters (60) axial einzuspannen.

8. Hinteres Schaltwerk (10) nach einem der Ansprüche 1 bis 3, **dadurch gekennzeichnet, dass** der Adapter (60) mit einem Anschlag (420) ausgeführt ist, der mit einem zugeordneten Gegenanschlag (422) des Fahrradrahmens, insbesondere des Halterungsabschnitts (201), formschlüssig zum Eingriff bringbar ist, um den Adapter (60) zumindest im fertig montieren Zustand gegen Verdrehung in wenigstens einer Richtung relativ zu dem Fahrradrahmen zu sichern.

9. Hinteres Schaltwerk (10) nach Anspruch 8, **dadurch gekennzeichnet, dass** der Anschlag (420) und der Gegenanschlag (422) dafür eingerichtet sind, den Adapter (60) gegen eine Verdrehung in einer ersten Drehrichtung (P) relativ zu dem Halterungsabschnitt (201) zu sichern, die einer zu der Kettenspannrichtung entgegengesetzten Kettenentspannungsrichtung entspricht, und dass der Anschlag (420) und der Gegenanschlag (422) dafür eingerichtet sind, eine Verdrehung des Adapters (60) in einer zur ersten Drehrichtung (P) entgegengesetzten zweiten Drehrichtung (Q) relativ zu dem Halterungsabschnitt (201) nicht zu blockieren.

10. Hinteres Schaltwerk (10) nach Anspruch 8 oder 9, **dadurch gekennzeichnet, dass** eine Anschlagfläche (420) eines radial vorstehenden Anschlagvorsprungs (421) einer Adaptermutter (66) des Adapters (60) den Anschlag und eine Gegenanschlagfläche (422) einer Oberflächenkontur des Halterungsabschnitts oder einer diesem benachbarten Formation des Fahrradrahmens (1) den Gegenanschlag bilden.

11. Hinteres Schaltwerk nach einem der Ansprüche 1 bis 10, **dadurch gekennzeichnet, dass** die Einstelleinrichtung an einem ersten Element einen Gewindesockel (305; 405) aufweist, mit welchem die Verstellschraube (307; 407; 507) in Schraubeingriff steht, und an einem zweiten Element einen der Verstellschraube zugeordneten Anschlag (409; 540) aufweist, wobei der Anschlag und ein durch Verdrehen der Verstellschraube in dem Gewindesockel variabel positionierbares Ende der Verstellschraube dazu ausgebildet sind, einen verstellbaren Verdrehanschlag für das Basiselement (20) in der der Kettenentspannungsrichtung entsprechenden Drehrichtung (P) zu bilden.

12. Hinteres Schaltwerk (10) nach Anspruch 11, **dadurch gekennzeichnet, dass** eine Adaptermutter (66) des Adapters (60) als erstes Element den Gewindesockel (305; 405) und das Basiselement (20) als zweites Element den Anschlag (409) aufweist.

13. Hinteres Schaltwerk (10) nach Anspruch 11, **dadurch gekennzeichnet, dass** das Basiselement (20) als erstes Element den Gewindesockel und der Halterungsabschnitt oder die diesem benachbarte Formation (540) des Fahrradrahmens (1) als zweites Element den Anschlag aufweist.

14. Hinteres Schaltwerk (10) nach einem der Ansprüche 1 bis 13, **dadurch gekennzeichnet, dass** ein Kopf (413; 513) der Verstellschraube (307; 407; 507), der mit einer Werkzeugeingriffsformation ausgeführt ist, im montierten Zustand des hinteren Schaltwerks (10) am Fahrradrahmen (1) von hinten her zugänglich ist

15. Fahrrad, umfassend einen Fahrradrahmen mit einem hinteren Laufrad und eine ein hinteres Schaltwerk aufweisende Kettenschaltung:
wobei das Fahrrad ferner die folgenden Merkmale aufweist:
- das hintere Laufrad ist mit einer eine Hinterradachsanordnung (4, 5, 6, 7, 8) umfassenden Statoranordnung (4, 5, 6, 7, 8) und einer Rotoranordnung (3, 100) ausgeführt, wobei die Rotoranordnung relativ zur Statoranordnung drehbar gelagert ist und eine Laufradnabe (3) mit einem ein Ritzelpaket (R) der Kettenschaltung tragenden Antreiber (100) umfasst;
- ein Hinterbau des Fahrradrahmens (1) weist einen linken Halterungsabschnitt und einen rechten Halterungsabschnitt (201) für eine innere Achse (7) der Hinterradachsanordnung des hinteren Laufrads auf, welche einen vorbestimmten definierten Axialabstand längs einer geometrischen Achse (A) der mittels der Halterungsabschnitte an dem Rahmen (1) montierten inneren Achse aufweisen und jeweils ein Gegenlager für eine an der inneren Achse angeordnete, zwischen den Halterungsabschnitten eingespannte und eine Baugruppe der Statoranordnung umfassende Komponentengruppe (4, 5, 8) bilden;
- das hintere Schaltwerk (10) ist in Bezug auf die geometrische Achse (A) koaxial an dem Fahrradrahmen montiert und umfasst:
- ein Basiselement (20),
- einen Schwenkmechanismus (30),
- ein bewegliches Element (40), und
- eine Kettenführungsanordnung (50);
wobei der Schwenkmechanismus (30) das Basiselement (20) mit dem beweglichen Element (40) verbindet, und die Kettenführungsanordnung (50) um eine Drehachse (P) drehbar mit dem beweglichen Element (40) verbunden ist;
wobei das Basiselement (20) ein erstes Anschlussende (21) zur in Bezug auf die geometrische Achse (A) koaxialen Montage an dem Fahrradrahmen (1) und ein zweites Anschlussende (29) zur Kopplung mit dem Schwenkmechanismus (30) umfasst;
wobei das erste Anschlussende (21) einen ersten Arm (22a; 22a'; 22a") und einen zweiten Arm (22b; 22b") aufweist, die in axialer Richtung voneinander beabstandet angeordnet und zur Montage des Schaltwerks (10) an dem zugeordneten rechten Halterungsabschnitt (201) des Hinterbaus mittels eines zugehörigen Adapters (60) eingerichtet sind, wobei der Adapter (60) ein Gewinde zur Herstellung einer Schraubverbindung aufweist;
und wobei sich der erste Arm (22a; 22a'; 22a") auf einer axialen Innenseite des zugeordneten Halterungsabschnitts und der zweite Arm (22b; 22b') auf einer axialen Außenseite des zugeordneten Halterungsabschnitts befinden;
**dadurch gekennzeichnet, dass** das hintere Schaltwerk (10) gemäß einem der vorhergehenden Ansprüche 1 bis 14 ausgeführt und am Fahrradrahmen (1) montiert ist.

## Claims

1. Rear gearshift mechanism (10) for installation on a bicycle frame (1) of a bicycle in a manner coaxial with respect to a rear-wheel axis (A), having:
- a base element (20),
- a pivot mechanism (30),
- a movable element (40), and
- a chain guide arrangement (50);
wherein the pivot mechanism (30) connects the base element (20) to the movable element (40), and the chain guide arrangement (50) is connected, so as to be rotatable about an axis of rotation (P), to the movable element (40);
wherein the base element (20) comprises a first attachment end (21) for installation on the bicycle frame (1) in a manner coaxial with respect to the rear-wheel axis (A), and a second attachment end (29) for coupling to the pivot mechanism (30);
wherein the first attachment end (21) has a first arm (22a; 22a'; 22a'') and a second arm (22b; 22a'') which are arranged spaced apart from one another in an axial direction and which are configured for the installation of the gearshift mechanism (10) on an associated bracket portion (201) of a rear-end structure of the bicycle frame (1) by means of an associated adapter (60), wherein the adapter (60) has a thread for producing a screw connection;
and wherein, in a defined pre-installed state and in a fully installed state, the first arm (22a; 22a'; 22b") is situated on an axial inner side of the bracket portion and the second arm (22b; 22b'') is situated on an axial outer side of the bracket portion;
**characterized in that** the base element (20) is designed with a setting device which has at least one manually actuatable adjustment screw (307; 407; 507; 607), which is configured separately from the adapter (60) and by means of which, in at least one of the pre-installed state and the fully installed state, the base element (20) can be pivoted relative to at least one of the adapter (60) and the bracket portion (201), coaxially with respect to the rear-wheel axis, in a chain tensioning direction.

2. Rear gearshift mechanism (10) according to Claim 1, **characterized in that** an inner diameter of a first centring opening (23a), provided in the first arm (22a'), of the base element (20) and an outer diameter of an abutment element (4), in particular hub end cap (4), of a rear-wheel axle arrangement of a rear wheel of the bicycle are coordinated with one another in order to centre the gearshift mechanism (10) in relation to the rear-wheel axis (A) by means of the abutment element (4).

3. Rear gearshift mechanism (10) according to Claim 1 or 2, **characterized in that**, in the fully installed state of the rear gearshift mechanism (10), the axial abutment surface of the abutment element (4), in particular hub end cap (4), of the rear-wheel axle arrangement bears under stress directly against an axial abutment surface of the adapter (60).

4. Rear gearshift mechanism according to Claim 1 or 3, **characterized in that** the adapter (60) is formed as a single piece.

5. Rear gearshift mechanism according to Claim 4, **characterized in that** the adapter (60), which is designed preferably as an adapter bolt (61), can, at an external thread (64), be screwed together with an internal thread of the first arm (22a'') of the base element (20).

6. Rear gearshift mechanism according to Claim 5, **characterized in that** the adapter (60) and the first arm (22a") and the second arm (22b'') of the base element (20) are configured such that, as a result of tightening of the adapter (60), they axially clamp the bracket portion, which has axial abutment surfaces, of the bicycle frame (1) between associated axial abutment surfaces of the first arm (22a'') and of the second arm (22b") or between associated axial abutment surfaces of the first arm (22a") and of a bolt head (62) of the adapter (60).

7. Rear gearshift mechanism according to Claim 5, **characterized by** a spacer sleeve (550) which is dimensioned to be received in a passage of the bracket portion (201) of the bicycle frame, wherein the adapter (60) and the spacer sleeve (550) and the first arm (22a") and the second arm (22b'') of the base element (20) are configured such that, as a result of tightening of the adapter (60), they axially clamp the spacer sleeve (550), which is received in the passage of the bracket portion (201) of the bicycle frame, between associated axial abutment surfaces of the first arm (22a) and of the second arm (22b) or between associated axial abutment surfaces of the first arm (22a) and of a bolt head (62) of the adapter (60).

8. Rear gearshift mechanism (10) according to any of Claims 1 to 3, **characterized in that** the adapter (60) is formed with an abutment (420) which can be placed in positively locking engagement with an associated counterpart abutment (422) of the bicycle frame, in particular of the bracket portion (201), in order to secure the adapter (60), at least in the fully installed state, against rotation in at least one direction relative to the bicycle frame.

9. Rear gearshift mechanism (10) according to Claim 8, **characterized in that** the abutment (420) and the counterpart abutment (422) are configured such that they secure the adapter (60) against a rotation in a first direction of rotation (P) relative to the bracket portion (201), which first direction of rotation corresponds to a chain relaxing direction which is opposite to the chain tensioning direction, and **in that** the abutment (420) and the counterpart abutment (422) are configured such that they do not block a rotation of the adapter (60) in a second direction of rotation (Q) relative to the bracket portion (201), which second direction of rotation is opposite to the first direction of rotation (P).

10. Rear gearshift mechanism (10) according to Claim 8 or 9, **characterized in that** an abutment surface (420) of a radially protruding abutment projection (421) of an adapter nut (66) of the adapter (60) forms the abutment, and a counterpart abutment surface (422) of a surface contour of the bracket portion or of a formation, adjacent to said bracket portion, of the bicycle frame (1) forms the counterpart abutment.

11. Rear gearshift mechanism according to any of Claims 1 to 10, **characterized in that** the setting device has, on a first element, a threaded pedestal (305; 405) with which the adjustment screw (307; 407; 507) is in screwed engagement, and has, on a second element, an abutment (409; 540) associated with the adjustment screw, wherein the abutment and an end of the adjustment screw, which end is variably positionable by rotation of the adjustment screw in the threaded pedestal, are designed to form an adjustable rotational abutment for the base element (20) in the direction of rotation (P) which corresponds to the chain relaxing direction.

12. Rear gearshift mechanism (10) according to Claim 11, **characterized in that** an adapter nut (66) of the adapter (60), as first element, has the threaded pedestal (305; 405), and the base element (20), as second element, has the abutment (409).

13. Rear gearshift mechanism (10) according to Claim 11, **characterized in that** the base element (20), as first element, has the threaded pedestal, and the bracket portion or the formation (540), adjacent to said bracket portion, of the bicycle frame (1), as second element, has the abutment.

14. Rear gearshift mechanism (10) according to any of Claims 1 to 13, **characterized in that** a head (413; 513) of the adjustment screw (307; 407; 507), which is formed with a tool engagement formation, is accessible from the rear in the installed state of the rear gearshift mechanism (10) on the bicycle frame (1).

15. Bicycle, comprising a bicycle frame with a rear wheel and comprising a derailleur system which has a rear gearshift mechanism:
wherein the bicycle furthermore has the following features:
- the rear wheel is formed with a stator arrangement (4, 5, 6, 7, 8), which comprises a rear-wheel axle arrangement (4, 5, 6, 7, 8), and with a rotor arrangement (3, 100), wherein the rotor arrangement is mounted so as to be rotatable relative to the stator arrangement and comprises a rotor hub (3) having a driver (100) which bears a pinion assembly (R) of the derailleur system;
- a rear-end structure of the bicycle frame (1) has a left-hand bracket portion and a right-hand bracket portion (201) for an inner axle (7) of the rear-wheel axle arrangement of the rear wheel, which bracket portions have a predetermined defined axial spacing along a geometrical axis (A) of the inner axle installed on the frame (1) by means of the bracket portions, and which bracket portions form in each case one counterbearing for a component group (4, 5, 8) which is arranged on the inner axle and which is clamped between the bracket portions and which comprises an assembly of the stator arrangement;
- the rear gearshift mechanism (10) is installed on the bicycle frame in a manner coaxial with respect to the geometrical axis (A) and comprises:
- a base element (20),
- a pivot mechanism (30),
- a movable element (40), and
- a chain guide arrangement (50);
wherein the pivot mechanism (30) connects the base element (20) to the movable element (40), and the chain guide arrangement (50) is connected, so as to be rotatable about an axis of rotation (P), to the movable element (40);
wherein the base element (20) comprises a first attachment end (21) for installation on the bicycle frame (1) in a manner coaxial with respect to the geometrical axis (A), and a second attachment end (29) for coupling to the pivot mechanism (30);
wherein the first attachment end (21) has a first arm (22a; 22a'; 22a'') and a second arm (22b; 22b'') which are arranged spaced apart from one another in an axial direction and which are configured for the installation of the gearshift mechanism (10) on the associated right-hand bracket portion (201) of the rear-end structure by means of an associated adapter (60), wherein the adapter (60) has a thread for producing a screw connection;
and wherein the first arm (22a; 22a'; 22a'') is situated on an axial inner side of the associated bracket portion and the second arm (22b; 22b') is situated on an axial outer side of the associated bracket portion;
**characterized in that** the rear gearshift mechanism (10) is designed according to any of the preceding Claims 1 to 14 and is installed on the bicycle frame (1).

## Revendications

1. Dérailleur arrière (10) destiné à être monté coaxialement par rapport à un essieu de roue arrière (A) sur un cadre de bicyclette (1) d'une bicyclette, présentant :
- un élément de base (20),
- un mécanisme de pivotement (30),
- un élément mobile (40), et
- un agencement (50) de guidage de chaîne ;
le mécanisme de pivotement (30) reliant l'élément de base (20) à l'élément mobile (40), et l'agencement (50) de guidage de chaîne étant relié à l'élément mobile (40) de manière à pouvoir tourner autour d'un axe de rotation (P) ;
l'élément de base (20) comprenant une première extrémité de raccordement (21) destinée à être montée coaxialement par rapport à l'essieu de roue arrière (A) sur le cadre de bicyclette (1), et une deuxième extrémité de raccordement (29) destinée à être couplée au mécanisme pivotant (30) ;
la première extrémité de raccordement (21) présentant un premier bras (22a ; 22a' ; 22a") et un deuxième bras (22b ; 22b") qui sont disposés à distance l'un de l'autre dans la direction axiale et qui sont adaptés pour le montage du dérailleur (10) sur une section de fixation correspondante (201) d'une structure arrière du cadre de bicyclette (1) au moyen d'un adaptateur associé (60), l'adaptateur (60) présentant un filetage pour réaliser une liaison vissée ;
et, dans un état prémonté défini et dans un état monté fini, le premier bras (22a ; 22a' ; 22b") se trouvant sur un côté intérieur axial de la section de fixation et le deuxième bras (22b ; 22b'') se trouvant sur un côté extérieur axial de la section de fixation ;
**caractérisé en ce que** l'élément de base (20) est réalisé avec un appareil de réglage présentant au moins une vis de réglage (307 ; 407 ; 507 ; 607) actionnable manuellement, qui est réalisé séparément de l'adaptateur (60) et avec lequel l'élément de base (20) peut pivoter dans au moins un état parmi l'état prémonté et l'état monté fini par rapport à au moins un élément parmi l'adaptateur (60) et la section de fixation (201) coaxialement à l'essieu de roue arrière dans une direction de tension de chaîne.

2. Dérailleur arrière (10) selon la revendication 1, **caractérisé en ce qu'**un diamètre intérieur d'une première ouverture de centrage (23a) prévue dans le premier bras (22a') de l'élément de base (20) et un diamètre extérieur d'un élément de butée (4), en particulier d'un capuchon d'extrémité de moyeu (4), d'un agencement d'essieu de roue arrière d'une roue arrière de la bicyclette sont adaptés l'un à l'autre afin de centrer le dérailleur (10) par rapport à l'essieu de roue arrière (A) au moyen de l'élément de butée (4).

3. Dérailleur arrière (10) selon la revendication 1 ou 2, **caractérisé en ce qu'**à l'état monté fini du dérailleur arrière (10), la surface de butée axiale de l'élément de butée (4), en particulier du capuchon d'extrémité de moyeu (4), de l'agencement d'essieu de roue arrière repose directement sous tension contre une surface de butée axiale de l'adaptateur (60).

4. Dérailleur arrière selon la revendication 1 ou 3, **caractérisé en ce que** l'adaptateur (60) est réalisé d'un seul tenant.

5. Dérailleur arrière selon la revendication 4, **caractérisé en ce que** l'adaptateur (60), réalisé de préférence sous la forme d'un boulon d'adaptation (61), peut être vissé sur un filetage extérieur (64) à l'aide d'un filetage intérieur du premier bras (22a'') de l'élément de base (20).

6. Dérailleur arrière selon la revendication 5, **caractérisé en ce que** l'adaptateur (60) ainsi que le premier bras (22a") et le deuxième bras (22b'') de l'élément de base (20) sont adaptés pour, par serrage de l'adaptateur (60), serrer la section de fixation du cadre de bicyclette présentant des surfaces de butée axiales (1) entre des surfaces d'appui axiales associées du premier bras (22a") et du deuxième bras (22b") ou entre des surfaces d'appui axiales associées du premier bras (22a") et d'une tête de boulon (62) de l'adaptateur (60).

7. Dérailleur arrière selon la revendication 5, **caractérisé par** une douille d'écartement (550) dimensionnée pour être logée dans un passage de la section de fixation (201) du cadre de bicyclette, l'adaptateur (60) et la douille d'écartement (550) ainsi que le premier bras (22a") et le deuxième bras (22b") de l'élément de base (20) étant adaptés pour, par serrage de l'adaptateur (60), serrer la douille d'écartement (550) logée dans le passage de la section de fixation (201) du cadre de bicyclette entre des surfaces d'appui axiales associées du premier bras (22a) et du deuxième bras (22b) ou entre des surfaces d'appui axiales associées du premier bras (22a) et d'une tête de boulon (62) de l'adaptateur (60).

8. Dérailleur arrière (10) selon l'une quelconque des revendications 1 à 3, **caractérisé en ce que** l'adaptateur (60) est réalisé avec une butée (420) qui peut être mise en prise par complémentarité de forme avec une contre-butée associée (422) du cadre de bicyclette, en particulier de la section de fixation (201), afin de bloquer l'adaptateur (60) au moins à l'état monté fini contre une rotation dans au moins une direction par rapport au cadre de bicyclette.

9. Dérailleur arrière (10) selon la revendication 8, **caractérisé en ce que** la butée (420) et la contre-butée (422) sont adaptées pour bloquer l'adaptateur (60) contre une rotation dans une première direction de rotation (P) par rapport à la section de fixation (201) qui correspond à une direction de détente de chaîne opposée à la direction de tension de chaîne, et **en ce que** la butée (420) et la contre-butée (422) sont adaptées pour ne pas bloquer une rotation de l'adaptateur (60) dans une deuxième direction de rotation (Q) opposée à la première direction de rotation (P) par rapport à la section de fixation (201).

10. Dérailleur arrière (10) selon la revendication 8 ou 9, **caractérisé en ce qu'**une surface de butée (420) d'une saillie de butée (421) dépassant radialement d'un écrou adaptateur (66) de l'adaptateur (60) forme la butée et une surface de contre-butée (422) d'un contour de surface de la section de fixation ou d'une formation adjacente à celle-ci du cadre de bicyclette (1) forme la contre-butée.

11. Dérailleur arrière selon l'une quelconque des revendications 1 à 10, **caractérisé en ce que** l'appareil de réglage présente, sur un premier élément, un socle fileté (305 ; 405) avec lequel la vis de réglage (307 ; 407 ; 507) est en prise par vissage, et sur un deuxième élément, une butée (409 ; 540) associée à la vis de réglage, la butée et une extrémité de la vis de réglage pouvant être positionnée de manière variable dans le socle fileté par rotation de la vis de réglage étant conçues pour former une butée de rotation réglable pour l'élément de base (20) dans la direction de rotation (P) correspondant à la direction de détente de la chaîne.

12. Dérailleur arrière (10) selon la revendication 11, **caractérisé en ce qu'**un écrou adaptateur (66) de l'adaptateur (60) présente comme premier élément le socle fileté (305 ; 405) et l'élément de base (20) comme deuxième élément la butée (409).

13. Dérailleur arrière (10) selon la revendication 11, **caractérisé en ce que** l'élément de base (20) présente comme premier élément le socle fileté et la section de fixation ou la formation (540) adjacente à celle-ci du cadre de bicyclette (1) comme deuxième élément la butée.

14. Dérailleur arrière (10) selon l'une quelconque des revendications 1 à 13, **caractérisé en ce qu'**une tête (413 ; 513) de la vis de réglage (307 ; 407 ; 507), qui est réalisée avec une formation d'engagement d'outil, est accessible par l'arrière à l'état monté du dérailleur arrière (10) sur le cadre de bicyclette (1).

15. Bicyclette, comprenant un cadre de bicyclette avec une roue arrière et une transmission par chaîne présentant un dérailleur arrière :
la bicyclette présentant en outre les caractéristiques suivantes :
- la roue arrière est réalisée avec un agencement de stator (4, 5, 6, 7, 8) comprenant un agencement d'essieu de roue arrière (4, 5, 6, 7, 8) et un agencement de rotor (3, 100), l'agencement de rotor étant monté de manière à pouvoir tourner par rapport à l'agencement de stator et comprenant un moyeu de roue (3) avec un entraînement (100) portant un ensemble de pignons (R) de la transmission par chaîne ;
- une structure arrière du cadre de bicyclette (1) présente une section de fixation gauche et une section de fixation droite (201) pour un essieu intérieur (7) de l'agencement d'essieu de roue arrière de la roue arrière, qui présentent une distance axiale définie prédéterminée le long d'un axe géométrique (a) de l'essieu intérieur monté sur le cadre (1) au moyen des sections de fixation et forment chacune un contre-palier pour un groupe de composants (4, 5, 8) disposé sur l'essieu intérieur, serré entre les sections de fixation et comprenant un ensemble de l'agencement de stator ;
- le dérailleur arrière (10) est monté de manière coaxiale par rapport à l'axe géométrique (A) sur le cadre de bicyclette et comprend :
- un élément de base (20),
- un mécanisme de pivotement (30),
- un élément mobile (40), et
- un agencement (50) de guidage de chaîne ;
le mécanisme de pivotement (30) reliant l'élément de base (20) à l'élément mobile (40), et l'agencement (50) de guidage de chaîne étant relié à l'élément mobile (40) de manière à pouvoir tourner autour d'un axe de rotation (P) ;
l'élément de base (20) comprenant une première extrémité de raccordement (21) destinée à être montée coaxialement par rapport à l'axe géométrique (A) sur le cadre de bicyclette (1) et une deuxième extrémité de raccordement (29) destinée à être couplée au mécanisme de pivotement (30) ;
la première extrémité de raccordement (21) présentant un premier bras (22a ; 22a' ; 22a'') et un deuxième bras (22b ; 22b'') qui sont disposés à distance l'un de l'autre dans la direction axiale et sont adaptés pour le montage du dérailleur (10) sur la section de fixation droite correspondante (201) de la structure arrière au moyen d'un adaptateur associé (60), l'adaptateur (60) présentant un filetage pour réaliser une liaison vissée ; et le premier bras (22a ; 22a' ; 22a") se trouvant sur un côté intérieur axial de la section de fixation correspondante et le deuxième bras (22b ; 22b') se trouvant sur un côté extérieur axial de la section de fixation associée ;
**caractérisé en ce que** le dérailleur arrière (10) est conçu selon l'une quelconque des revendications 1 à 14 précédentes et est monté sur le cadre de bicyclette (1).
